# FASCICULE DE BREVET EUROPEEN

(11) **EP 4 217 547 B1**
(45) Date de publication et mention de la délivrance du brevet: **04.06.2025**
(21) Numéro de dépôt: 21799080.3
(22) Date de dépôt: 14.09.2021
(51) Int. Cl.: E03B 7/07, E03B 7/09, G01F 15/00

(54) **DISPOSITIF DE MAINTIEN**
HALTEVORRICHTUNG
HOLDING DEVICE

(30) Priorité: 22.09.2020 FR 2009608
(43) Date de publication de la demande: 02.08.2023
(73) Titulaire: Etablissements Saint Germain Et Straub, 80210 Feuquières-en-Vimeu (FR); Suez International, 92040 Paris la Défense Cedex (FR)
(72) Inventeur: HELLE, Jacky, 80130 Friville Escarbotin (FR); NOUVET, Emmanuel, 92400 Paris La Défense (FR); SORNIN, Hervé, 92400 Paris La Défense (FR)
(74) Mandataire: Bureau Duthoit Legros Associés
(86) Numéro de dépôt international: PCT/FR2021/051560
(87) Numéro de publication internationale: WO 2022/064120

(56) Documents cités:
- EP-A1- 1 006 343
- JP-A- 2005 172 710

## Description

La présente invention est relative à un dispositif de maintien d'un appareil de mesure d'une caractéristique d'un fluide entre deux tronçons de conduite, ainsi qu'un équipement comprenant un appareil de mesure et un tel dispositif de maintien dudit appareil.

### Domaine technique

La présente invention concerne plus particulièrement, mais non limitativement celui de l'abduction d'eau, et des dispositifs de maintien assurant la connexion étanche des tubulures d'un d'appareil de mesure d'une caractéristique d'un fluide (volume, débit, pression...), ou de mesure d'une caractéristique (odeur, bruit...) du milieu environnant.

L'appareil de mesure, tel que par exemple un compteur d'eau, comprend une tubulure d'entrée et une tubulure de sortie, ainsi qu'un moyen de mesure d'une caractéristique du fluide circulant depuis la tubulure d'entrée jusqu'à la tubulure de sortie, tel qu'une unité de comptage volumétrique dans le cas d'un compteur d'eau.

De tels dispositif de maintien sont généralement intégrés dans un boîtier, et peuvent faire partie d'un ensemble enterré, typiquement appelé « regard ».

### Technique antérieure

Selon un premier état de la technique connu, les regards de l'état de la technique sont équipés de tubulures flexibles avec écrou(s) prisonnier(s). Le montage nécessite donc de raccorder chaque tubulure (d'entrée et de sortie) du compteur par vissage, d'une part, d'un premier écrou prisonnier sur la tubulure d'entrée, et qui présente un filet de vis à cet effet, destiné à coopérer avec le taraudage du premier l'écrou, et d'autre part, par vissage d'un deuxième écrou sur la tubulure de sortie qui présente un filet de vis destinée à coopérer pour le vissage du deuxième écrou.

Le vissage du premier écrou, vient comprimer un premier joint entre la tubulure d'entée et un premier flexible, afin de réaliser l'étanchéité au niveau de l'extrémité de la tubulure d'entrée. Le vissage du deuxième écrou vient comprimer un deuxième joint entre la tubulure de sortie et un deuxième flexible afin de réaliser l'étanchéité au niveau de l'extrémité de sortie de la tubulure de sortie.

Le montage du compteur d'eau et sa connexion étanche sont donc fastidieux pour l'opérateur, nécessitant (tour à tour) les vissages de deux écrous pour réaliser les deux étanchéités nécessaires au raccordement étanche, et typiquement à l'aide d'un outil de manœuvre tel qu'une clef.

L'état de la technique connaît toutefois du document FR 2 786 863 un dispositif de maintien entre deux tronçons d'une conduite, d'un appareil de mesure, venant simplifier le montage et la mise en étanchéité du compteur.

Ce dispositif de maintien divulgué par le document FR 2 786 863 permet d'assurer un montage de l'appareil de mesure qui comprend les deux parties tubulaires, à savoir la tubulure d'entrée et la tubulure de sortie, qui sont classiquement alignées suivant un axe, et chacune pourvue d'une portée d'appui, (extrême), et d'une portée de centrage.

Le dispositif de maintien comprend un tronçon amont destiné à être connecté de manière étanche à la tubulure d'entrée du compteur et un tronçon aval destiné à être connecté de manière étanche à la tubulure de sortie de compteur, le tronçon amont et le tronçon aval étant rigidement espacés l'un par rapport à l'autre.

Le tronçon amont du dispositif de maintien comprend une portée d'appui, étanche configurée pour réaliser l'étanchéité avec la portée d'appui de la tubulure d'entrée de l'appareil de mesure, par l'intermédiaire d'un premier joint, et le tronçon aval du dispositif comprend une portée d'appui configurée pour réaliser l'étanchéité avec la portée d'appui de la tubulure de sortie, par l'intermédiaire d'un deuxième joint.

Selon cette antériorité, la portée d'appui du tronçon d'entrée est associée à un moyen de déplacement qui peut être déplacé entre deux positions, dont une position écartée autorisant le retrait ou la mise en place du compteur, et une position d'appui configurée pour assurer l'étanchéité simultanée des portées extrêmes du compteur avec les portées d'appui du tronçon amont et du tronçon aval, avec compression du premier joint et du second joint.

De manière notable, et selon cette antériorité, le moyen de déplacement comprend un piston qui :
- supporte la portée d'appui du tronçon amont, mobile par rapport à une partie fixe du tronçon amont, et
- comporte une face exposée au fluide sous pression qui traverse l'appareil de mesure, depuis le tronçon amont et jusqu'au tronçon aval, configurée de sorte à induire un effort contraignant la portée d'appui du tronçon amont contre la portée de la tubulure d'entrée, avec compression étanche du premier joint et donc par contre-réaction, et de manière simultanée, un effort contraignement la portée d'appui du tronçon aval contre la portée de la tubulure de sortie du compteur, avec compression du second joint.

Ce piston forme une partie de conduite mobile du tronçon amont et coulisse à l'intérieur d'une partie de conduite fixe du tronçon amont.

Préalablement à cette action assurant l'étanchéité induite par la pression du fluide, un organe élastique, interne, disposé entre le piston et la tubulure fixe du tronçon amont, a pour fonction de contraindre la portée d'appui portée du piston vers et contre la portée de la tubulure d'entrée de l'appareil de mesure, en particulier lorsque la source de fluide est coupée par un robinet d'arrêt.

Le regard selon cette antériorité vient simplifier le montage en autorisant le retrait et la mise en place, avec les mises en étanchéité simultanées du premier joint et du deuxième joint, grâce à la pression du fluide.

Pour retirer le compteur, il suffit de fermer le robinet d'arrêt, la chute de pression annihilant l'effort induit par l'eau sur le piston. La pression du fluide annihilée, opérateur peut alors repousser le piston, en sens inverse du sens de poussée, à savoir à l'encontre de la force de rappel de l'organe élastique.

Pour remettre le compteur d'eau, le robinet d'arrêt fermé, il suffit de :
- repousser le piston afin de permettre la mise en place du compteur, puis de laisser l'organe élastique déplacer en retour le piston jusqu'à ce que la portée d'appui du piston vienne contre la portée de la tubulure d'entrée, et de manière simultanée avec contrainte de la portée de la tubulure de sortie contre la portée d'appui du tronçon de sortie, par contre-réaction, puis,
- d'ouvrir le robinet d'arrêt de sorte que la pression du fluide exercée contre la face du piston induise un effort sur le piston mobile contraignant la portée d'appui du tronçon d'entrée contre la portée de la tubulure d'entrée, avec compression étanche du premier joint, et donc par contre-réaction, et de manière simultanée, un effort contraignement la portée d'appui du tronçon de sortie contre la portée de la tubulure de sortie du compteur, avec compression du second joint.

Un tel dispositif de maintien tel qu'enseigné par le document FR 2 786 863 présente toutefois certains inconvénients, en particulier lorsque la pression du réseau connaît des variations.

Selon les constatations de l'inventeur, l'étanchéité au fluide entre les tubulures d'entrée et de sortie du compteur, d'une part, et les tronçons amont et aval du dispositif de maintien, d'autre part, est exercé essentiellement par l'effort induit par la pression du fluide sur le piston jusqu'à obtenir un effort assurant une compression suffisante du premier joint et deuxième joint. Toutefois, et en pratique l'effort induit par la pression du fluide peut s'avérer insuffisante pour assurer les mises en étanchéité, en particulier lorsque la pression du fluide est trop faible et descend en dessous d'un seuil bas.

Aussi, et en cas de perte de pression, l'effort résultant de la pression du fluide ne permet plus de comprimer suffisamment les joints de manière totalement étanche, et est ainsi à l'origine de fuites, même lorsque la force de rappel de l'organe élastique contraint la portée d'appui du tronçon amont contre l'extrémité correspondant de la tubulure.

On connaît encore du document JP2005172710A un dispositif de maintien d'un compteur d'eau qui comprend un tronçon amont destiné à être connecté de manière étanche à la tubulure d'entrée du compteur, et un tronçon aval destiné à être connecté de manière étanche à la tubulure de sortie du compteur, avec compression étanche d'un premier joint entre une portée d'appui du tronçon amont et une portée de la tubulure d'entrée, et compression étanche d'un second joint entre une portée de la tubulure de sortie et la portée du tronçon aval.

Le tronçon amont (selon le sens de l'écoulement de l'eau) comprend de manière notable, et à l'instar du document précédent, une tubulure fixe, ainsi qu'un piston, coulissant de manière étanche à l'intérieur de la tubulure fixe, grâce à un joint entre le piston et la paroi interne de la tubulure fixe.

Ce piston porte de manière notable :
- la portée d'appui du tronçon mobile, au niveau d'un épaulement de plus grand diamètre du piston, de diamètre supérieur à la tubulure fixe, y compris une gorge circulaire recevant ledit premier joint,
- un berceau, en partie basse, s'étendant en saillie et en porte-à-faux de cette portée d'appui vers le compteur, ledit berceau étant destiné à accueillir en la soutenant l'extrémité de la tubulure d'entrée du compteur et assurer son maintien avant la mise en étanchéité, à savoir lorsque le piston est dans une position rétractée dans la portion de conduite fixe.

Afin de maintenir toujours le berceau mobile en partie basse, un dispositif anti-rotation comportant un ergot permet d'assurer que le berceau coulisse linéairement, en interdisant la rotation du piston autour de son axe longitudinal.

Dans un tel dispositif la mise en étanchéité est assurée par le déplacement du piston et jusqu'à la compression étanche du premier joint par un effort induit résultant du vissage d'un organe de manœuvre selon un premier sens de rotation, cet organe de manœuvre comportant un taraudage coopérant au vissage avec un filet externe de la tubulure fixe.

Cet organe de commande permet de transmettre un effort de serrage au piston lors de son vissage par un opérateur, et comporte à cet effet une surface de poussée configurée pour exercer une poussé sur l'épaulement du piston lors du vissage selon le premier sens de rotation.

On notera encore que cet organe de commande comporte, du côté de l'épaulement opposé à la surface de poussée, une bague de retenue repérée 41, qui vient accrocher l'épaulement du piston de l'autre côté de la surface de poussée pour provoquer la rétraction du piston lorsque l'organe de manœuvre est vissé dans un deuxième sens de rotation (opposé au premier sens).

Aussi, et selon cette antériorité Japonaise, l'effort du piston assurant la compression du joint est assuré essentiellement par l'effort de serrage induit par le vissage de l'organe de manœuvre. Il est compréhensible pour l'homme du métier que les filets de vis entre l'organe de manœuvre et la tubulure fixe sont choisis avec un pas suffisamment faible pour permettre à l'opérateur d'appliquer un effort de serrage assurant la compression étanche et à la main, par rotation d'ailettes de l'organe.

On notera encore que dans cette antériorité japonaise, et contrairement à l'enseignement du document FR 2 786 863, la pression induite par l'eau sur le piston n'a pas d'effet substantiel sur la compression du premier joint : si le piston et l'organe de commande sont configurés pour pivoter l'un par rapport à l'autre lors du vissage, ils sont liés au déplacement, suivant la direction axiale de déplacement du piston, non seulement dans le sens de déploiement du piston, mais encore dans le sens de rétraction. Autrement dit l'organe de manœuvre vissé sur le filet de la tubulure fixe interdit au piston de se déplacer librement sous l'action de la pression de l'eau.

Selon les constations de l'inventeur, si cette antériorité japonaise répond au problème de fuite d'eau par le vissage et serrage du piston jusqu'à mise en compression étanche du premier joint et par contre-réaction du second joint, cette antériorité oblige en pratique à choisir un filet de vis à pas de vis suffisamment faible pour obtenir un tel serrage de l'opérateur, et nécessitant de tourner l'organe de commande suivant plusieurs tours afin d'obtenir de serrage et la compression des joints. Cette antériorité japonaise répond au problème de fuite du document FR 2 786 863, mais en sacrifiant la simplicité de mise en œuvre pour l'opérateur.

On connait encore du document JP2018-96738 A, un tel dispositif de maintien, entre deux conduites, présentant un tronçon amont et un tronçon aval, selon le sens d'écoulement du fluide, et qui comprend sur le tronçon aval, un piston portant une portée d'appui mobile destiné à assurer l'étanchéité au niveau d'une tubulure de sortie du compteur d'eau. Ce piston est contraint au serrage par vissage d'un système de serrage comprenant une vis solidaire d'une poignée de manœuvre. Un système de renvoi d'angle comprend un plot contraint à la descente ou à la montée par le vissage, et une gorge de guidage solidaire du piston et permet de positionner la poignée avec son axe de rotation sensiblement perpendiculaire à l'axe longitudinal du piston. Le vissage de la vis dans un premier sens contraint le plot à la descente, qui coulisse dans la gorge de guidage du piston pour déplacer le piston dans le sens de serrage afin d'ouvrir l'arrivée d'eau et assurer l'étanchéité du compteur d'eau. Le vissage dans l'autre sens permet de déplacer le piston jusqu'à une position où un obturateur vient fermer l'extrémité longitudinale du piston opposée celle portant la portée d'appui, interdisant l'écoulement dans une conduite en aval du compteur. Comme l'antériorité japonaise précédente, et selon les constations des inventeurs, le renvoi d'angle comportant le couple plot et gorge interdit au piston de se déplacer librement sous la pression de l'eau, et ne permet pas de profiter de la pression de l'eau pour assurer l'étanchéité entre le piston et le compteur. EP1006343A1 divulgue un autre dispositif selon l'état de la technique.

Selon les constatations des inventeurs, cette solution qui comprend une poignée de manœuvre, saillante à la perpendiculaire du tronçon aval augmente par ailleurs l'encombrement du dispositif de maintien, ce qui peut limiter son intégration lorsque la place disponible est limitée.

La présente invention vise à proposer un dispositif de maintien assurant une pose ou un retrait rapide et simple de l'appareil de mesure pour l'utilisateur, tout en garantissant une bonne étanchéité des joints comprimés entre les tronçons amont et aval et les tubulures de l'appareil de mesure, même en cas de chute de la pression interne du fluide.

La présente invention propose un tel dispositif de maintien dont le mécanisme autorisant la pose et la mise en étanchéité ou encore le retrait de l'appareil présente un encombrement réduit, offrant une grande capacité d'intégration, en particulier dans des espaces réduits.

Au moins selon un mode de réalisation, la présente invention propose un tel dispositif de maintien qui assure une bonne étanchéité lorsque la pression interne du fluide augmente.

Au moins selon un premier aspect de l'invention, la présente invention propose un tel dispositif de maintien qui permet de comprimer de manière sûre les joints, ni trop pour éviter leur détérioration notamment par fluage, ni trop peu pour éviter les fuites du fluide.

Au moins selon un mode de réalisation, la présente invention propose un tel dispositif de maintien compatible avec un grand nombre d'appareils de mesure même ceux dont les tolérances de fabrication sont importantes, en particulier suivant la dimension séparant les portées extrêmes des tubulures d'entrée et de sortie dudit appareil de mesure.

### Résumé

La présente invention vient améliorer la situation.

Selon un **premier** aspect, la présente invention a pour objet un dispositif de maintien d'un appareil de mesure d'une caractéristique d'un fluide et/ou d'une caractéristique de l'environnement dudit appareil de mesure,
ledit dispositif de maintien comprenant :
   - deux tronçons de conduite, les deux tronçons de conduite comprenant un tronçon amont et un tronçon aval destinés à être connectés de manière étanche, respectivement à une tubulure d'entrée et une tubulure de sortie de l'appareil de mesure, le fluide étant destiné à circuler sous pression depuis le tronçon amont jusqu'au tronçon aval en traversant la tubulure de l'appareil de mesure,
   - le tronçon amont et le tronçon aval rigidement fixés à un même support, dont les conduites s'étendent suivant un même axe longitudinal, le tronçon amont comportant une portée d'appui destinée à être connectée de manière étanche au fluide à une portée de la tubulure d'entrée de l'appareil via un premier joint, le tronçon aval comportant une portée d'appui destinée à être connectée de manière étanche au fluide à une portée de la tubulure de sortie de l'appareil via un deuxième joint,
   - le tronçon amont ou encore aval, comportant une portion fixe de conduite par rapport au support, et une portion de conduite mobile, prolongeant de manière étanche la portion de conduite fixe, la portion de conduite mobile étant configurée pour être déplacée suivant deux degrés de liberté, y compris un premier degré de liberté en coulissement suivant l'axe longitudinal et un deuxième degré de liberté en rotation autour dudit axe longitudinal, ladite portion de conduite mobile embarquant la portée d'appui configurée pour comprimer le premier joint ou encore le deuxième joint,
et dans lequel la portion de conduite mobile est configurée pour être pivotée par rapport à la portion de conduite fixe, par une rotation autour de l'axe longitudinal, selon une course angulaire limitée, inférieure à un tour, autour de l'axe longitudinal, la portion de conduite fixe et la portion de conduite mobile présentant respectivement une première came et une seconde came, mutuellement engageantes, les première et deuxième cames, étant configurées, lors du pivotement de la portion de conduite mobile autour de l'axe longitudinal selon la course angulaire limitée pour contraindre ladite portion de conduite mobile d'une position rétractée, dans la portion de conduite fixe, autorisant le retrait ou la mise en place de l'appareil de mesure, jusqu'à une position déployée assurant la compression étanche du premier joint et du deuxième joint.

Les paragraphes qui suivent décrivent des caractéristiques de l'invention selon le **premier aspect** de l'invention, qui peuvent être considérées seuls ou en combinaison.

Selon un mode de réalisation, la portion de conduite mobile comporte au moins une surface soumise à l'action du fluide sous pression, située opposée à la portée d'appui et de sorte que la portion mobile de conduite est configurée, sous l'action de la pression du fluide supérieure à un seuil, pour autoriser et provoquer son coulissement par rapport à la portion de conduite fixe, suivant ledit axe longitudinal depuis la position déployée, dite première position déployée pour laquelle la première came et la seconde came sont en contact jusqu'à une deuxième position déployée, après perte de contact entre la première came et de la seconde came et création d'un écartement entre la première came et la deuxième came, de sorte à comprimer plus encore de manière étanche le premier joint ou le deuxième joint et simultanément par contre-réaction, le deuxième joint ou le premier joint, sous l'action de la pression du fluide.

Selon un mode de réalisation, la portion de conduite mobile comporte une portée de centrage comprenant un berceau s'étendant en saillie de la portée d'appui, ledit berceau étant configuré pour soutenir l'extrémité de la tubulure d'entrée ou de sortie de l'appareil de mesure en étant positionné dans une position inférieure, dans la position rétractée de la portion de conduite mobile,
et de sorte à autoriser le retrait ou la mise en place de l'extrémité de la tubulure d'entrée ou encore de sortie par un dégagement diamétralement opposé au berceau lorsque l'extrémité de la tubulure de sortie ou encore d'entrée de l'appareil est engagée dans une portée de centrage du tronçon opposé, aval ou amont,
et qui, après pivotement de la portion de conduite mobile autour de l'axe longitudinal selon ladite course angulaire limitée, est configuré pour maintenir et centrer l'extrémité de la tubulure d'entrée alors disposée entre le berceau de la portion de conduite mobile, alors supérieur dans la position déployée de la portion de conduite mobile et un rebord de centrage au niveau du dégagement.

Selon un mode de réalisation, le tronçon amont ou le tronçon aval comporte un système de réglage et de rattrapage du jeu, configuré pour régler l'écartement entre la portée d'appui du tronçon amont et la portée d'appui du tronçon aval, dans la position rétractée de la portion de conduite mobile, préalablement à la compression du premier joint et du deuxième joint obtenu par le pivotement de la portion de conduite mobile selon la course angulaire limitée.

Selon un mode de réalisation, ledit système de réglage et de rattrapage du jeu comporte une bague crantée comportant une premier chant d'appui et éventuellement un deuxième chant d'appui opposés, ainsi qu'une pluralité de crans disposés en escalier le long du premier chant d'appui, ladite bague crantée étant montée pivotante autour de l'axe longitudinal sur le tronçon amont ou sur le tronçon aval, et au moins un plot de réglage, configuré pour être reçu de manière amovible dans les crans de la bague crantée en assurant plusieurs positions de réglage d'écartement, ladite bague crantée étant configurée pour permettre un réglage d'écartement entre une première portion de conduite et une deuxième portion de conduite dudit tronçon amont ou du tronçon aval, mobiles selon l'axe longitudinal l'une par rapport à l'autre, la deuxième portion de conduite prolongeant de manière étanche la première portion de conduite, ledit plot de réglage solidaire de la première portion de conduite, la bague crantée en appui, d'un côté via le premier chant d'appui contre le plot de réglage, et de l'autre côté via le deuxième chant d'appui contre la deuxième portion de conduite lorsque la bague crantée et la deuxième portion de conduite sont deux éléments distincts selon une première possibilité, la bague crantée solidaire de la deuxième portion de conduite selon une seconde possibilité, le réglage étant obtenu par rotation de la bague crantée et jusqu'à positionner le plot de réglage dans l'un desdits crans de la bague crantée assurant le réglage d'écartement souhaité.

Selon un mode de réalisation, la première portion de conduite est fixe, solidaire du support, la deuxième position de conduite est mobile portant l'une des portées d'appui du tronçon aval ou du tronçon amont, la deuxième de conduite mobile comporte au moins une surface soumise à l'action du fluide sous pression, située opposée à la portée d'appui et de sorte que la deuxième portion de conduite est configurée, sous l'action de la pression du fluide supérieure à un seuil, pour autoriser son coulissement par rapport à la première portion de conduite, suivant ledit axe longitudinal, depuis la position où la bague crantée est en contact avec la deuxième portion de conduite par le deuxième chant d'appui selon la première possibilité et/ ou le plot de réglage est engagé contre le fond d'un cran jusqu'à une position déployée après perte de contact entre la bague cranté et la deuxième portion de conduite selon la première possibilité, et/ou décollement du plot de réglage du fond du cran à l'intérieur duquel ledit plot de réglage est engagé, de sorte à comprimer plus encore de manière étanche le premier joint ou le deuxième joint et simultanément par contre-réaction, le deuxième joint ou le premier joint, sous l'action de la pression du fluide.

Selon un mode de réalisation, ladite au moins une deuxième came est agencée, suivant la direction axiale, du côté de la portion de conduite mobile opposé à la portée d'appui et dans lequel ladite au moins une première came est matérialisée au niveau d'un épaulement de ladite portion de conduite fixe, à l'intérieur ladite la portion de conduite fixe.

Selon un mode de réalisation, la course angulaire limitée inférieure à 1 tour est comprise entre ¼ de tour et ¾ de tour, par exemple entre 1/3 de tour et 2/3 de tour, par exemple un demi-tour, autour de l'axe longitudinal. Par exemple la course angulaire limitée est un demi-tour, ladite première came comportant une première rampe hélicoïdale s'étendant sur une moitié du périmètre interne de la portion de conduite fixe, et une seconde rampe hélicoïdale s'étendant sur l'autre moitié du périmètre interne de la portion de conduite fixe, coopérant avec la deuxième came, à savoir respectivement et simultanément avec une troisième rampe s'étendant sur une moitié du périmètre de la portion de conduite fixe, et une quatrième rampe s'étendant sur l'autre moitié du périmètre de la portion de conduite fixe.

Selon un mode de réalisation, la portion de conduite mobile comprend une poignée de manœuvre, saillante vers l'extérieur, s'étendant radialement à la portion de conduite fixe.

Selon un mode de réalisation, la portion de conduite fixe comporte une portée de guidage pour la portion de conduite mobile, y compris un berceau s'étendant inférieure, définissant une échancrure supérieure au berceau traversée par la poignée de manœuvre, ladite échancrure autorisant la rotation de la poignée de manœuvre selon la course angulaire limitée de la portion de conduite mobile autour de l'axe longitudinal.

Selon un mode de réalisation, la course axiale de la portion de conduite mobile, suivant l'axe longitudinal depuis la position rétractée jusqu'à la position déployée est comprise entre 1 et 4 mm, et de préférence entre 1 et 2 mm ,configurée pour comprimer de manière étanche au fluide les premier joint J1 et deuxième joint J2.

Selon un **deuxième** aspect, la présente invention a pour objet un dispositif de maintien d'un appareil de mesure d'une caractéristique d'un fluide et/ou du milieu environnant, ledit dispositif de maintien comprenant :
- deux tronçons de conduite, les deux tronçons de conduite comprenant un tronçon amont et un tronçon aval destinés à être connectés de manière étanche, respectivement à une tubulure d'entrée et une tubulure de sortie de l'appareil de mesure, le fluide étant destiné à circuler sous pression depuis le tronçon amont jusqu'au tronçon aval en traversant la tubulure de l'appareil de mesure,
- le tronçon amont et le tronçon aval rigidement fixés à un même support, dont les conduites s'étendent suivant un même axe longitudinal, le tronçon amont comportant une portée d'appui destinée à être connectée de manière étanche au fluide à une portée de la tubulure d'entrée de l'appareil de mesure via un premier joint, le tronçon aval comportant une portée d'appui destinée à être connectée de manière étanche au fluide à une portée de la tubulure de sortie de l'appareil de mesure via un deuxième joint,
- le tronçon amont ou encore aval, comportant une première portion de conduite, fixe par rapport au support, et une deuxième portion de conduite mobile, portant la portée d'appui du tronçon aval ou du tronçon amont, la deuxième portion de conduite prolongeant de manière étanche la première portion de conduite, la portion de conduite mobile étant configurée pour être déplacée suivant au moins un degré de liberté en coulissement suivant l'axe longitudinal et dans lequel un système de réglage et de rattrape du jeu comprend une bague crantée comportant un premier chant d'appui et éventuellement un deuxième chant d'appui, opposés, ainsi qu'une pluralité de crans disposés en escalier le long du premier chant d'appui, ladite bague crantée étant montée pivotante autour de l'axe longitudinal sur le tronçon amont ou sur le tronçon aval, et au moins un plot de réglage, configuré pour être reçu de manière amovible dans les crans de la bague crantée en assurant plusieurs positions de réglage d'écartement, ladite bague crantée étant configurée pour permettre un réglage d'écartement entre ladite première portion de conduite et ladite deuxième portion de conduite, ledit plot de réglage solidaire de la première portion de conduite, la bague crantée en appui, d'un côté via le premier chant d'appui contre le plot de réglage, et de l'autre côté via le deuxième chant d'appui contre la deuxième portion de conduite lorsque la bague crantée et la deuxième portion de conduite sont deux éléments distincts selon une première possibilité, la bague crantée solidaire de la deuxième portion de conduite selon une seconde possibilité, le réglage étant obtenu par rotation de la bague crantée et jusqu'à positionner le plot de réglage dans l'un desdits crans de la bague crantée assurant le réglage d'écartement souhaité, ladite bague crantée étant configurée pour contraindre ladite deuxième portion de conduite d'une position rétractée, autorisant le retrait ou la mise en place de l'appareil de mesure, jusqu'à une position déployée assurant la compression étanche du premier joint et du deuxième joint.

Selon un mode de de réalisation de l'invention selon le deuxième aspect, la deuxième de conduite mobile comporte au moins une surface soumise à l'action du fluide sous pression, située opposée à la portée d'appui portée par la deuxième portion de conduite et de sorte que la deuxième portion de conduite est configurée, sous l'action de la pression du fluide supérieure à un seuil, pour autoriser et provoquer son coulissement par rapport à la première portion de conduite, suivant ledit axe longitudinal, depuis la position où la bague crantée est en contact avec la deuxième portion de conduite par le deuxième chant d'appui selon la première possibilité et/ ou le plot de réglage est engagé contre le fond d'un cran jusqu'à une position déployée après perte de contact entre la bague cranté et la deuxième portion de conduite selon la première possibilité, et/ou décollement du plot de réglage du fond du cran à l'intérieur duquel ledit plot de réglage est engagé, de sorte à comprimer plus encore de manière étanche le premier joint ou le deuxième joint et simultanément par contre-réaction, le deuxième joint ou le premier joint, sous l'action de la pression du fluide.

Selon un mode de réalisation, le dispositif de maintien selon le **premier aspect ou le deuxième aspect** de l'invention présente les caractéristiques suivantes, prises seules ou en combinaison :
- un robinet d'arrêt sur un conduite précèdent le tronçon amont, et/ou
- au moins une prise de purge, mettant en communication l'intérieur et l'extérieur de la conduite du tronçon aval, et/ou
- une soupape à fonction d'anti-retour dans une conduite prolongeant la conduite aval.

Selon un **troisième aspect,** l'invention a pour objet un équipement comportant un appareil de mesure d'une caractéristique d'un fluide ou du milieu environnant, ledit appareil de mesure présentant une tubulure d'entrée et une tubulure de sortie et un dispositif de maintien selon le premier aspect ou le deuxième aspect, comportant le tronçon amont et le tronçon aval destinés à être connectés de manière étanche, respectivement à la tubulure d'entrée et à la tubulure de sortie dudit appareil de mesure. L'appareil de mesure peut être, non limitativement un compteur volumétrique, tel qu'un compteur d'eau.

### Brève description des dessins

D'autres caractéristiques, détails et avantages apparaîtront à la lecture de la description détaillée ci-après, et à l'analyse des dessins annexés, sur lesquels :
**Fig. 1**

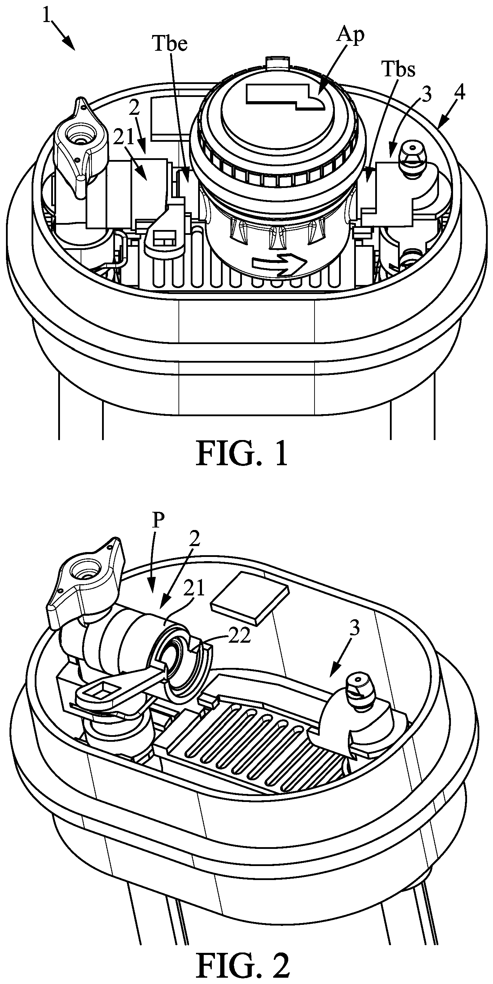

   [Fig. 1] est une vue du l'équipement conforme à la présente divulgation, y compris le dispositif de maintien dans la position rétractée de la portion de conduite mobile du tronçon amont, les extrémités des tubulures d'entrée et d'appareil de mesure (i.e un compteur d'eau) reposant sur des berceaux des tronçons amont et aval du dispositif de maintien.
**Fig. 2**
   [Fig. 2] est une vue du dispositif de maintien, y compris son tronçon amont et son tronçon aval, lorsque l'appareil de mesure est enlevé.
**Fig. 3**

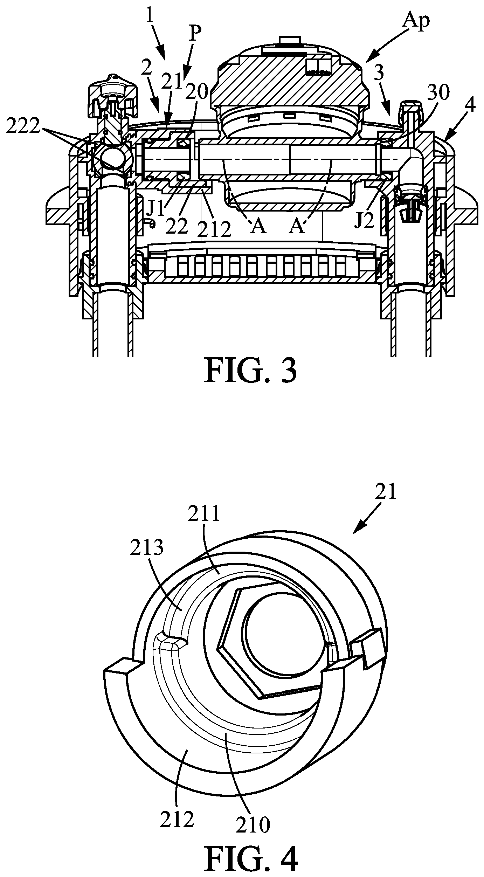

   [Fig. 3] est une vue de coupe de l'équipement selon la figure 1, selon un plan de coupe sensiblement vertical, passant par l'axe longitudinal des conduites du tronçon amont et du tronçon aval.
**Fig. 4**
   [Fig. 4] est une vue de détail de la portion de conduite fixe du tronçon amont, illustrant plus particulièrement la première came, y compris une première rampe hélicoïdale et une deuxième rampe hélicoïdale, internes à la portion de conduite, le berceau, inférieur, ainsi qu'une échancrure supérieure au berceau destinée à être traversée par une poignée de manœuvre de la portion de conduite mobile.
**Fig. 5**

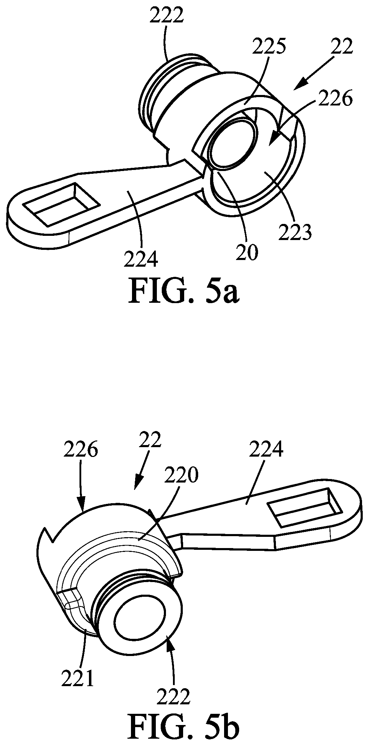

   [Fig. 5a] est une vue de détail de la portion de conduite, mobile, illustrant la portée d'appui, y compris une gorge circulaire pour la réception du premier joint, et la portée de centrage qui comprend un berceau sur la partie inférieure et un rebord de centrage, sur la partie supérieure, le rebord de centrage s'étendant en saillie par rapport à la portée d'appui d'une dimension, suivant l'axe de la conduite, inférieure à la dimension du berceau pour former un dégagement autorisant l'insertion ou l'extraction de l'extrémité de la tubulure d'entrée dans la position rétractée de la portion de conduite mobile.
**Fig. 5**
   [Fig. 5b] est une vue de détail de la portion de conduite mobile, du côté opposé à la portée d'appui, illustrant la surface exposée au fluide, ainsi que la deuxième came, y compris une troisième rampe hélicoïdale et une quatrième rampe hélicoïdale.
**Fig. 6**

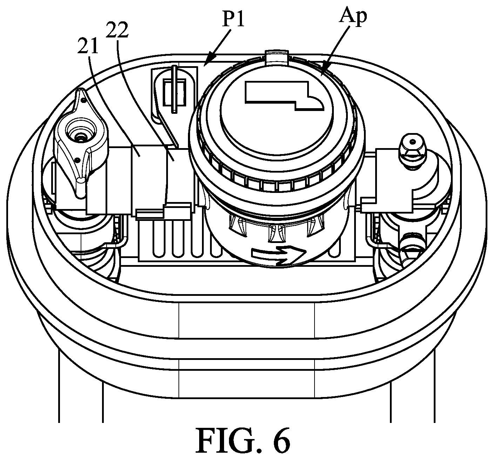

   [Fig. 6] est une vue du dispositif de maintien, un robinet d'arrêt coupant l'arrivée de fluide dans le tronçon amont, dans la première position déployée de la portion de conduite, obtenue, à partir de la position rétractée illustrée à la figure 1, après saisie de la poignée de manœuvre et rotation manuelle de la portion de conduite mobile, d'un demi-tour.
**Fig. 7**

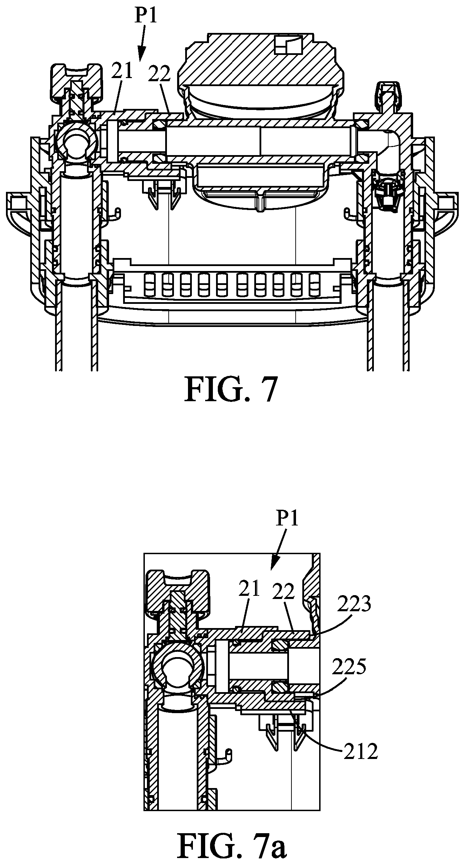

   [Fig. 7] est une vue de coupe du dispositif de maintien selon la figure 6, dans la première position déployée de la portion de conduite mobile, les cames - première came de la portion de conduite fixe, deuxième came de la portion de conduite mobile - alors en contact.
**Fig. 7a**
   [Fig. 7a] est une vue de détail de la figure 7 illustrant le contact entre les cames - première came et deuxième came - dans la première position déployée de la portion de conduite mobile.
**Fig. 8**

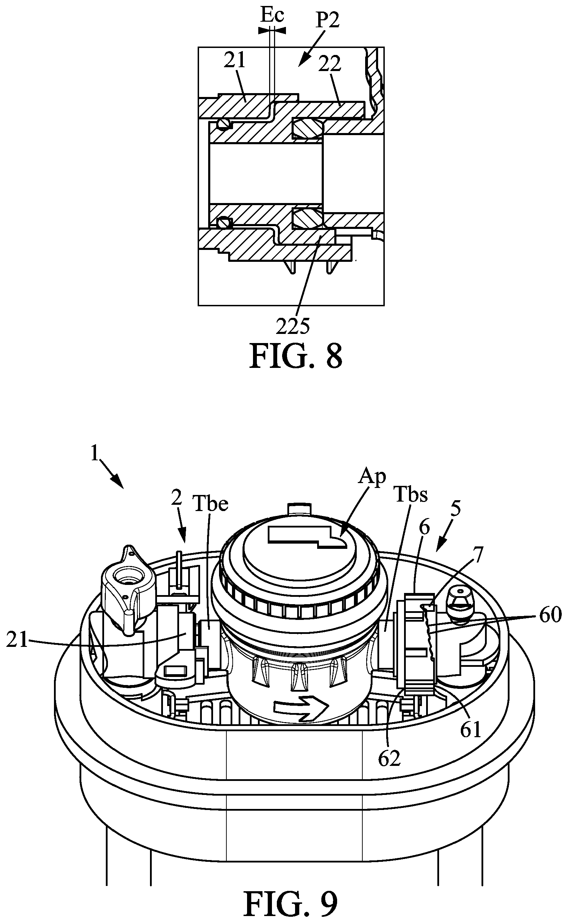

   [Fig. 8] est une vue de détail de la figure 7a, après ouverture du robinet d'arrêt, la pression du fluide sur la portion de conduite mobile provoquant son déplacement jusqu'à une deuxième position déployée, avec perte de contact entre les cames, première came et deuxième came, et création d'un écartement afin de comprimer plus encore les joints, premier joint et second joint.
**Fig. 9**
   [Fig. 9] est une vue du l'équipement conforme à la présente invention, selon un autre mode de réalisation, avant la compression des premier et second joints sur les portées des tubulures de l'appareil de mesure, le dispositif de maintien comportant sur le tronçon aval, la portion de conduite fixe, et la portion de conduite mobile, en contact par les première et deuxième cames, destinés à assurer la compression des joints et le verrouillage de l'appareil après pivotement de la portion de conduite mobile, et sur le tronçon amont, une première portion de conduite fixe, et une deuxième portion de conduite mobile faisant partie d'un système de réglage et de rattrapage du jeu avec bague crantée.
**Fig. 10**

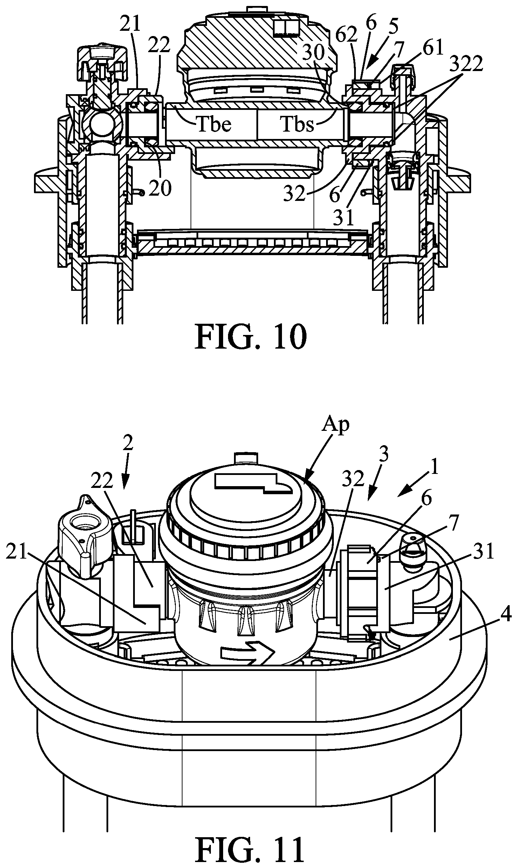

   [Fig. 10] est une vue de la figure 9 selon un plan de coupe passant par l'axe longitudinal, la portion de conduite mobile dans la position rétractée à l'intérieur de la portion de conduite fixe sur le tronçon amont, la deuxième portion de conduite dans la position rétractée à l'intérieur de la première portion de conduite sur le tronçon aval
**Fig. 11**
   [Fig. 11] est une vue de l'équipement selon la figure 10, après compression des premier et deuxième joints et le verrouillage de l'appareil de mesure au dispositif de maintien, obtenu tout d'abord par la rotation de la bague crantée et déploiement de la deuxième portion de conduite du tronçon aval, jusqu'à la suppression du jeu (sans compression substantielle des premier et deuxième joints) entre les portées d'appui des tronçons amont et aval et les portées extrêmes des tubulures de l'appareil de mesure, puis par le pivotement notamment manuel d'un demi-tour de la portion de conduite mobile qui vient se déployer en comprimant de manière étanche les joints, sous le travail de la première et de la deuxième came.
**Fig. 12**

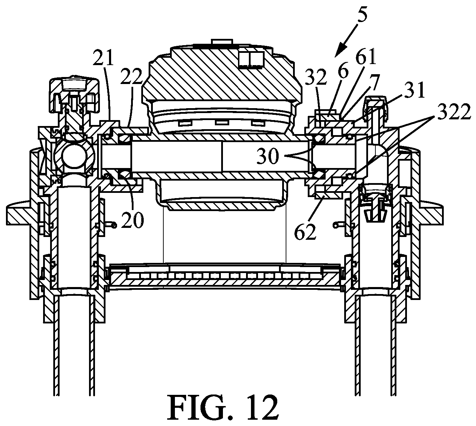

   [Fig. 12] est une vue de coupe de la figure 11, illustrant la portion de conduite mobile dans la position déployée sur le tronçon amont, à gauche, et la deuxième portion de conduite dans la position déployée sous l'action de la bague crantée, à droite.

### Description des modes de réalisation

Les dessins et la description ci-après contiennent, pour l'essentiel, des éléments de caractère certain. Ils pourront donc non seulement servir à mieux faire comprendre la présente divulgation, mais aussi contribuer à sa définition, le cas échéant.

Aussi la présente invention est relative à un dispositif de maintien 1 d'un appareil Ap de mesure d'une caractéristique (par exemple, le volume, débit, la pression...) d'un fluide et/ou de mesure d'une caractéristique (par exemple le bruit, ou encore une odeur) du milieu environnant ledit appareil de mesure.

Ce dispositif de maintien comprend :
- deux tronçons de conduite, les deux tronçons de conduite comprenant un tronçon amont 2 et un tronçon aval 3 destinés à être connectés de manière étanche, respectivement à une tubulure d'entrée Tbe et une tubulure de sortie Tbs de l'appareil de mesure, le fluide étant destiné à circuler sous pression depuis le tronçon amont 2 jusqu'au tronçon aval 3 en traversant la tubulure de l'appareil de mesure Ap,
- le tronçon amont 2 et le tronçon aval 3 rigidement fixés à un même support 4, dont les conduites s'étendent suivant un même axe longitudinal A, le tronçon amont 2 comportant une portée d'appui 20 destinée à être connectée de manière étanche au fluide à une portée de la tubulure d'entrée Tbe de l'appareil de mesure Ap via un premier joint J1, le tronçon aval 3 comportant une portée d'appui 30 destinée à être connectée de manière étanche au fluide à une portée de la tubulure de sortie Tbs de l'appareil via un deuxième joint J2.

Tel qu'illustré à titre d'exemple à la figure 1, le dispositif de maintien 1 permet de maintenir l'appareil de mesure Ap entre deux conduites, aval et amont, qui sont sensiblement verticales et parallèles l'une par rapport à l'autre dans l'exemple de la figure 1, le tronçon de conduite amont 2 dudit dispositif de maintien 1 prolongeant de manière étanche au fluide la conduite amont selon le sens de circulation du fluide, la conduite aval prolongeant de manière étanche au fluide le tronçon de conduite aval 3 dudit dispositif de maintien.

Dans cet exemple de la figure 1, la conduite amont et la conduite aval sont sensiblement perpendiculaires à l'axe longitudinale A des tronçons amont et avant, cet axe longitudinal A pouvant être sensiblement horizontale. Il est bien entendu que la présente invention n'est pas limitée à cette configuration, l'axe longitudinal A des tronçons amont et avant du dispositif de maintien pouvant prendre d'autres directions, par exemple une direction verticale. Par ailleurs les conduites amont et aval peuvent encore être agencées, par exemple sensiblement suivant l'axe longitudinal A, et non perpendiculaires à ce dernier.

Le support 4 peut prendre la forme d'un capotage logeant au moins partiellement le tronçon amont 2 et le tronçon aval 3 du dispositif de maintien, voire l'appareil de mesure Ap lorsque maintenu par le dispositif de maintien.

Ce support 4 peut s'étendre sensiblement horizontalement, tel qu'illustré à la figure 1, lorsque l'axe longitudinal A est lui-même horizontal. Le support 4 peut encore s'étendre verticalement, lorsque l'axe longitudinal A est lui-même vertical.

Selon un **premier aspect** de l'invention, le tronçon amont 2 ou encore aval, comportant une portion fixe de conduite 21 par rapport au support 4, et une portion de conduite mobile 22, prolongeant de manière étanche la portion de conduite fixe, la portion de conduite mobile 22 étant configurée pour être déplacée suivant deux degrés de liberté, y compris un premier degré de liberté en coulissement suivant l'axe longitudinal A et un deuxième degré de liberté en rotation autour dudit axe longitudinal A.

Sur les vues de coupe des figures, et de manière générale, la portion de conduite mobile 22 et la portion de conduite fixe sont en liaison étanche via un joint annulaire, notamment porté par la portion de conduite mobile 22, susceptible de glisser sur une paroi intérieure de la portion de conduite fixe 21. Une gorge G recevant ce joint annulaire peut être prévue sur la portion mobile 22, comme visible aux figures 5a et 5b.

La portion de conduite mobile 22 embarque la portée d'appui 20 configurée pour comprimer le premier joint J1 lorsque sur le tronçon amont 2 tel qu'illustré à la figure 1, ou encore embarque la portée d'appui configurée pour comprimer le deuxième joint J2 lorsque sur le tronçon aval, selon un autre exemple (non illustré).

Cette portion de conduite mobile 22 du tronçon amont (ou aval) est configurée pour être pivotée par rapport à la portion de conduite fixe 21, par une rotation autour de l'axe longitudinal A, selon une course angulaire limitée, inférieure à un tour, autour de l'axe longitudinal A, la portion de conduite fixe 21 et la portion de conduite mobile 22 du tronçon amont ou aval présentant respectivement une première came 210, 211 et une seconde came 220, 221, mutuellement engageantes.

Ces première et deuxième cames, sont configurées, lors du pivotement de la portion de conduite mobile 22 autour de l'axe longitudinal A selon la course angulaire limitée pour contraindre ladite portion de conduite mobile 22 d'une position rétractée Pr dans la portion de conduite fixe 21, telle qu'illustrée à titre d'exemple à la figure 3, autorisant le retrait ou la mise en place de l'appareil de mesure Ap, jusqu'à une position déployée P1 assurant la compression étanche du premier joint J1 et du deuxième joint J2.

Tel qu'illustré aux exemples des figures, et de manière générale, l'actionnement en rotation de la portion de conduite mobile 22 peut être manuel : à cet effet la portion de conduite mobile 22 peut comprendre une poignée de manœuvre 224, en particulier saillante vers l'extérieur, s'étendant radialement à la portion de conduite fixe 21.

Selon une alternative non illustrée, l'actionnement de la portion de conduite mobile 22 en rotation peut être motorisé.

De préférence, en fin de course, dans la position déployée 1 on peut prévoir l'ajout d'un moyen évitant un désarmement accidentel, par blocage de la rotation de la portion de conduite mobile 22.

Par exemple, et en fin de course et dans la position déployée, la poignée 224 peut venir en fin de course contre un appui 40 du support 4, et tel qu'illustré à la figure 6. Un organe de fixation Or est inséré simultanément au travers d'un orifice de la poignée 224 et d'un orifice de l'appui 40 pour interdire le désarmement accidentel. Cet organe de fixation Or peut être un clip plastique.

Cet organe de fixation Or peut être un dispositif anti-fraude nécessitant d'être rompu pour être retiré et présenter ainsi une fonction de témoin d'ouverture : il peut par exemple s'agir d'un clip irréversible.

Alternativement l'ouverture de la poignée 224, lorsqu'en regard de l'orifice de l'appui 40 peut permettre la mise en place d'un lien, notamment scellé par un plomb. Ce lien traverse simultanément l'orifice de l'appui 40 et l'ouverture de la poignée 224, et nécessite d'être rompu/délié pour autoriser le désarmement.

Selon une alternative non illustrée, le désarmement accidentel de la portion de conduite mobile 22, alors en position déployée, peut être obtenu par le dessin des première et deuxième came, qui peuvent présenter, en fin de course de ladite course angulaire limitée, des plats ou des pentes inversées (non illustrés) assurant une position stable de la portion de conduite mobile en position déployée P1.

De manière notable, le passage de la position rétractée Pr jusqu'à la position déployée est obtenu selon une course angulaire limitée de la portion de conduite mobile, inférieure à un tour, autour de l'axe longitudinal A, soit une action très rapide et aisée, en particulier lorsque opérée manuellement par l'opérateur.

En particulier, la course angulaire limitée inférieure à 1 tour peut être comprise entre ¼ de tour et ¾ de tour, par exemple entre 1/3 de tour et 2/3 de tour, par exemple un demi-tour, autour de l'axe longitudinal A.

La première came et la deuxième came peuvent par exemple s'étendre sensiblement selon une trajectoire hélicoïdale (autour de l'axe A).

Par ailleurs, ladite au moins une deuxième came 220, 221 peut être agencée, suivant la direction axiale, du côté de la portion de conduite mobile 22 opposé à la portée d'appui 20 et ladite au moins une première came 210, 211 est matérialisée au niveau d'un épaulement de ladite portion de conduite fixe 210, à l'intérieur ladite la portion de conduite fixe 210.

Par exemple, et comme visible à titre d'exemple lorsque la course angulaire limitée est un demi-tour, ladite première came peut comporter une première rampe hélicoïdale 210 s'étendant sur une moitié du périmètre interne de la portion de conduite fixe 21, et une seconde rampe hélicoïdale 211 s'étendant sur l'autre moitié du périmètre interne de la portion de conduite fixe 21, (voir figure 4) et coopérer avec la deuxième came, à savoir respectivement et simultanément avec une troisième rampe 220 s'étendant sur une moitié du périmètre de la portion de conduite fixe 21, et une quatrième rampe 221 s'étendant sur l'autre moitié du périmètre de la portion de conduite fixe 21, et comme visible à la figure 5b.

Selon un mode de réalisation, la portion de conduite mobile 22 comporte une portée de centrage, comprenant un berceau 223 s'étendant en saillie de la portée d'appui 20. Ce berceau est configuré pour soutenir l'extrémité de la tubulure d'entrée Tbe de l'appareil de mesure Ap (ou encore soutenir l'extrémité de la tubulure de sortie Tbs de l'appareil de mesure Ap) dans la position rétractée Pr de la portion de conduite mobile 22.

Ce berceau 223 autorise, comme illustré à la figure 3 le retrait ou la mise en place de l'extrémité de la tubulure d'entrée Tbe (ou de sortoe Tbs) par un dégagement 226 diamétralement opposé au berceau 223 lorsque l'extrémité de la tubulure de sortie (ou d'entrée) de l'appareil est engagée dans une portée de centrage du tronçon opposé, aval 3 ou amont 4.

Après pivotement de la portion de conduite mobile 22 autour de l'axe longitudinal A selon ladite course angulaire limitée, le berceau est configuré pour maintenir et centrer l'extrémité de la tubulure d'entrée Tbe alors disposée entre le berceau 223 de la portion de conduite mobile, alors supérieur dans la position déployée P1 de la portion de conduite mobile 22 et un rebord 225 de centrage au niveau du dégagement 226, et comme visible de la figure 7.

Le berceau 223 de la portion de conduite mobile 22 permet ainsi à l'opérateur, de déposer l'appareil de mesure Ap, dans la position rétractée Pr de la portion de conduite mobile, les extrémités des tubulures Tbe Tbs de l'appareil de mesure étant avantageusement soutenu par ledit berceau et la partie de centrage sur le tronçon aval (ou amont) opposé à celui du berceau, avant d'obtenir le verrouillage de l'appareil de mesure Ap après pivotement de la portion mobile 22 de la course angulaire limitée. Ces opérations de dépose et de verrouillage peuvent être obtenues d'une seule main. On note que le rebord de centrage 225 peut s'étendre selon ledit axe longitudinal A depuis la portée d'appui 20 suivant une dimension inférieure à celle du berceau 223.

La course axiale de la portion de conduite mobile 22, depuis la position rétractée Pr jusqu'à la position déployée est avantageusement configurée pour comprimer les deux joints - premier joint J1 et deuxième joint J2 - de manière optimale, à savoir ni trop peu car générant des fuites, en évitant la surcompression pouvant provoquer une détérioration prématurée des joints. Cette course axiale peut être comprise entre 1 et 4 mm et de préférence entre 1 et 2 mm, tel que 1,5 mm. Cette course axiale est donc déterminée en relation avec la course axiale nécessaire pour comprimer les premier joint J1 et deuxième joint J2.

Aussi et dans le cas une came hélicoïdale à pas constant, le pas hélicoïdal de la première came et de la deuxième came peut être compris entre 2 mm et 8 mm, plus particulièrement entre 2 et 4 mm, tel que 3 mm.

Un tel fonctionnement avec une compression optimale des deux joints par la course axiale de la portion de conduite mobile 22 nécessite toutefois le respect d'une chaîne de côtes rigoureuses, d'une part pour le dispositif de maintien et en particulier s'agissant de l'écartement entre les deux portées 20, 30 d'appui des tronçons amont et aval, mais encore d'autre part s'agissant des deux portées des tubulures d'entrée et de sortie de l'appareil de mesure Ap.

Afin d'être compatible avec le plus grand nombre d'appareils de mesure, même ceux avec des tolérances de fabrication importantes, le tronçon amont 2 ou le tronçon aval 3 peut comporter un système de réglage et de rattrapage du jeu 5. Un tel système de réglage et de rattrapage du jeu 5 est configuré pour régler l'écartement entre la portée d'appui 20 du tronçon amont et la portée d'appui 30 du tronçon aval, dans la position rétractée Pr de la portion de conduite mobile 22, préalablement à la compression du premier joint J1 et du deuxième joint 22 obtenu par le pivotement de la portion de conduite mobile selon la course angulaire limitée, et le travail des première et deuxième cames entre la portion de conduite mobile 22, et la portion de conduite fixe 21.

Le système de réglage et de rattrapage de jeu 5 permet de modifier l'écartement entre la portée d'appui 20 du tronçon amont et de la portée d'appui du tronçon aval 30 jusqu'à mise en contact et suppression du jeu avec la portée de la tubulure d'entrée et de la portée tubulure de sortie, en comprimant légèrement le premier joint J1 et le deuxième joint J2, et alors que la portion de conduite mobile 22 est dans sa position rétractée Pr.

Une fois le contact établi et les jeux supprimés entre la portée d'appui 20 du tronçon amont, la portée de la tubulure d'entrée et le premier joint J1, d'une part, et entre la portion d'appui 30 du tronçon aval, la portée de la tubulure de sortie et le deuxième joint J2, d'autre part, la portion de conduite mobile 22 est actionnée de la course angulaire limitée jusqu'à sa position déployée P1, par exemple manuellement. Avantageusement, les premier et deuxième joint J1 et J2 sont comprimés de manière étanche de manière optimale, ni trop pour éviter leur détérioration par fluage, ni trop peu évitant ainsi les fuites.

Ledit système de réglage et de rattrape 5 du jeu peut, à titre d'exemple comporter une bague crantée 6 comportant un premier chant d'appui 61, et éventuellement un deuxième chant d'appui 62, opposés, ainsi qu'une pluralité de crans 60 disposés en escalier le long du premier chant d'appui 61. Les crans 60 portés par le premier chant d'appui 61 sont disposés en escalier par rapport au deuxième chant 62 pour constituer différentes positions de réglages.

La bague crantée est alors configurée pour permettre un réglage d'écartement entre une première portion de conduite 31 et une deuxième portion de conduite 32 dudit tronçon amont 3 selon l'exemple illustré ou du tronçon aval. Cette bague crantée 6 est montée pivotante autour de l'axe longitudinal sur le tronçon aval 3, tel qu'illustré, voire sur le tronçon amont selon un exemple non illustré. La bague crantée 6 peut être montée pivotante sur une surface de la première portion de conduite 31. Selon un mode de réalisation, illustré aux figures, la deuxième portion de conduite 32 et la bague cranté 6 sont deux éléments distincts. La bague crantée est alors configurée pour venir en appui sur la portion de conduite 32, par contact du deuxième chant d'appui 62 sur un épaulement de la portion de conduite 32. Alternativement, et selon un exemple non illustré, la bague crantée 6 peut être solidaire de la pièce constituant la deuxième portion de conduite 32. Selon ce dernier mode de réalisation, la bague crantée 6 et la deuxième portion de conduite 32 peuvent être fabriquées à moindre coût car constituées d'un élément d'un seul tenant. Dans un tel cas, le deuxième chant d'appui 62 est superflu.

Le système de réglage et de rattrapage de jeu comporte encore au moins un plot de réglage 7, configuré pour être reçu de manière amovible dans les crans de la bague crantée 6 en assurant plusieurs positions de réglage d'écartement.

Lesdits première et deuxième portion de conduite 31, 32 sont mobiles selon l'axe longitudinal A l'une par rapport à l'autre, la deuxième portion de conduite 32 prolongeant de manière étanche la première portion de conduite 31. On remarque ainsi qu'à la figure 10, un joint annulaire monté sur une gorge d'une paroi externe de la deuxième portion de conduite 32 coopère de manière étanche avec une paroi interne de la première portion de conduite 31, ce joint annulaire étant configuré pour glisser sur la paroi interne.

Le plot de réglage 7 est solidaire de la première portion de conduite 31, la bague crantée en appui, d'un côté via le premier chant d'appui 61 portant les crans contre le plot de réglage 7, et de l'autre côté via le deuxième chant d'appui 62 contre la deuxième portion de conduite 32 lorsque la bague crantée est un élément distinct de la deuxième portion de conduite. Alternativement la bague crantée est solidaire de la deuxième portion de conduite 32. Le réglage est obtenu par rotation de la bague crantée 6 et jusqu'à positionner le plot de réglage 7 dans l'un desdits crans de la bague crantée assurant le réglage d'écartement souhaité.

Par exemple et à la figure 10, la position angulaire de la bague crantée 6 sur le tronçon de conduite permet de positionner le plot de réglage 7 contre le cran 60 de la bague crantée 6 positionné au plus près du deuxième chant d'appui 62 : la deuxième portion de conduite 32 peut être rétractée au maximum dans la première portion de conduite 31.

Au contraire et à la figure 12, la position angulaire de la bague crantée sur le tronçon de conduite permet de positionner le plot de réglage 7 contre le cran 60 de la bague crantée 6 positionné au plus loin du deuxième chant d'appui 62 : la deuxième portion de conduite 32 est forcée au déploiement, par comparaison avec la vue de la figure 10.

La bague crantée 6 comporte de préférence une pluralité de crans intermédiaires, entre ces deux crans extrêmes, obtenant différentes positions de réglage intermédiaires, entre ces deux positions extrêmes constituées par la position rétractée (figure 10) et la position déployée (figure 12) de la deuxième portion mobile. Le nombre de crans peut par exemple être compris entre 3 et 15, notamment entre 5 et 15.

Selon un mode de réalisation avantageux, le dispositif de maintien est équipé de moyens assurant une compression des joints - premier joint et deuxième joint - par la pression interne du fluide, et additionnement à la compression obtenue par le travail des première et deuxième cames. On assure toujours une bonne compression des premier et deuxième joint J1 et J2, en particulier lorsque la pression interne du fluide est importante.

Par exemple et selon une possibilité, la portion de conduite mobile 22 comporte au moins une surface 222 soumise à l'action du fluide sous pression, située opposée à la portée d'appui 20. Avantageusement, la portion mobile de conduite 22 est alors configurée, sous l'action de la pression du fluide supérieure à un seuil, pour autoriser et provoquer son coulissement par rapport à la portion de conduite fixe 21, suivant ledit axe longitudinal A depuis la position déployée, dite première position déployée P1 pour laquelle la première came et la seconde came sont en contact (voir figure 7a) jusqu'à une deuxième position déployée P2 (voir figure 8), après perte de contact entre la première came 210,211 et de la seconde came 220,221.

Il en résulte la création d'un écartement Ec entre la première came et la deuxième came. Une telle configuration permet de comprimer plus encore de manière étanche le premier joint J1 (ou le deuxième joint J2) et simultanément par contre-réaction, le deuxième joint J2 (ou le premier joint J1), sous l'action de la pression du fluide. Lorsque le dispositif de maintien 1 comprend l'organe de fixation Or traversant simultanément l'ouverture de la poignée de manœuvre 224 et l'ouverture de l'appui 40 du support 4, afin d'interdire un désarmement accidentel, cet organe de fixation Or interdit le pivotement en sens inverse de la poignée de manœuvre 224 et donc de la portion de conduite mobile 22, sans toutefois brider le coulissement de la portion de conduite mobile 22 de la première position déployée P1 jusqu'à la deuxième position déployée P2. Ce coulissement reste possible par la présence de jeux entre l'organe de fixation Or et l'une et/ou l'autre des ouvertures choisies parmi celles de la poignée de manœuvre 224 et de l'appui 40 du support, et suivant l'axe longitudinal A.

Alternativement ou additionnellement, la première portion de conduite 31 est fixe, solidaire du support, la deuxième position de conduite 32 est mobile portant l'un des portées d'appui 30 du tronçon aval ou du tronçon amont, la deuxième de conduite mobile 32 comportant au moins une surface 322 soumise à l'action du fluide sous pression, située opposée à la portée d'appui 30.

Cette deuxième portion de conduite 32 est configurée, sous l'action de la pression du fluide supérieure à un seuil, pour autoriser et provoquer son coulissement par rapport à la première portion de conduite, suivant ledit axe longitudinal A, notamment depuis la position où la bague crantée est en contact avec la deuxième portion de conduite 32 (lorsque la bague crantée et la deuxième portion de conduite sont deux éléments distincts) jusqu'à une position déployée après perte de contact entre la bague cranté 6 et la deuxième portion de conduite 32 (non illustrée) en particulier lorsque la bague crantée 6 et la deuxième portion de conduite 32 sont deux éléments distincts, et/ou décollement du plot de réglage 7 du fond du cran à l'intérieur duquel il est engagé.

Lorsque la bague crantée 6 est solidaire de la deuxième portion de conduite 32, la bague crantée et la deuxième portion de conduite 32 peuvent être constituées par un élément d'un seul tenant. Le déplacement entre les deux portions de conduites 31, 32 sous l'action du fluide est alors possible par décollement du plot de réglage 7 du fond du cran 60 dans lequel le plot de réglage 7 est engagé. La profondeur du cran 60 est alors dimensionnée pour permettre un tel décollement du plot de réglage 7 à partir du fond du cran, sans que ce plot ne sorte de ce cran. Une telle configuration permet de comprimer plus encore de manière étanche le premier joint J2 (ou le deuxième joint J1) et simultanément par contre-réaction, le deuxième joint J2 (ou le premier joint J1) sous l'action de la pression du fluide.

Ainsi et par exemple à la figure 12 :
- la portion de conduite mobile 22 sur le tronçon amont 2 est libre de coulisser sous l'action de la pression interne du fluide, après perte de contact entre les première et deuxième cames pour comprimer les joints J1 et J2, mais encore additionnement,
- la deuxième portion de conduite 32 sur le tronçon aval 3 est libre de coulisser sous la pression du fluide, après perte de contact avec le deuxième chant 62 de la bague crantée, et/ou décollement du plot de réglage 7 du fond du cran.

Selon un **deuxième aspect** de la présente invention, le dispositif de maintien peut être dépourvu de ladite portion de conduite fixe et la portion de conduite mobile, en engagement par leur première et deuxième cames, mais comporter uniquement le système de réglage et de rattrape de jeu avec bague crantée, qui est ici utilisé non seulement pour rattraper le jeu, mais plus encore pour assurer la compression des premier et deuxième joints.

Le tronçon amont ou encore aval 3, comporte ainsi une première portion de conduite 31, fixe par rapport au support 4, et une deuxième portion de conduite mobile 32, portant la portée d'appui 30 du tronçon aval ou du tronçon amont, la deuxième portion de conduite 32 prolongeant de manière étanche la première portion de conduite 31.

Cette deuxième portion de conduite mobile 32 est configurée pour être déplacée suivant au moins un degré de liberté en coulissement suivant l'axe longitudinal A et dans lequel un système de réglage et de rattrape 5 du jeu comporte une bague crantée 6 comportant des premier et deuxième chants d'appui 61,62 opposés, ainsi qu'une pluralité de crans 60 disposés en escalier le long du premier chant d'appui 61.

Le fonctionnement de cette bague crantée a déjà été explicitée, et la description faite pour le premier aspect de l'invention reste valable pour le deuxième aspect : cette bague crantée 6 est montée pivotante autour de l'axe longitudinal A sur le tronçon amont 2 ou sur le tronçon aval 3, et au moins un plot de réglage 7, configuré pour être reçu de manière amovible dans les crans de la bague crantée 6 assure plusieurs positions de réglage d'écartement.

Cette bague crantée 6 est configurée pour permettre un réglage d'écartement entre ladite première portion de conduite et ladite deuxième portion de conduite 31,32, ledit plot de réglage 7 solidaire de la première portion de conduite 31 la bague crantée en appui, d'un côté via le premier chant d'appui 61 contre le plot de réglage 7, et de l'autre côté via le deuxième chant d'appui 62 contre la deuxième portion de conduite 32 lorsque la bague crantée 6 et la deuxième portion de conduite 32 sont deux éléments distincts. Alternativement, la bague crantée 6 est solidaire de la deuxième portion de conduite 6, fabriquée par un élément d'un seul tenant. Dans un tel cas le deuxième chant d'appui 62 est superflu.

Le réglage est ici obtenu par rotation de la bague crantée et jusqu'à positionner le plot de réglage 7 dans l'un desdits crans 60 de la bague crantée assurant le réglage d'écartement souhaité.

La bague crantée 6 est ici configurée pour contraindre ladite deuxième portion de conduite 32 d'une position rétractée, autorisant le retrait ou la mise en place de l'appareil de mesure Ap, jusqu'à une position déployée assurant la compression étanche du premier joint J1 et du deuxième joint J2. Aussi, et dans le dispositif de maintien 1 selon le deuxième aspect de l'invention, le couple bague crantée 6 et plot de réglage 7 est utilisé non seulement pour supprimer le jeu à l'instar du dispositif de maintien selon le premier aspect, mais plus encore pour assurer la compression étanche les premier et deuxième joint J1, J2, et contrairement au dispositif de maintien selon le premier aspect.

Selon un mode de réalisation de ce deuxième aspect, la deuxième de conduite mobile 32 peut comporter au moins une surface 322 soumise à l'action du fluide sous pression, située opposée à la portée d'appui 30 et de sorte que la deuxième portion de conduite 32 est configurée, sous l'action de la pression du fluide supérieure à un seuil, pour autoriser et provoquer son coulissement par rapport à la première portion de conduite 31, suivant ledit axe longitudinal A, notamment depuis la position où la bague crantée 6 est en contact avec la deuxième portion de conduite 32 par le deuxième chant d'appui 62 lorsque la bague crantée et la deuxième portion de conduite 32 sont deux éléments distincts, jusqu'à une position déployée notamment après perte de contact entre la bague cranté 6 et la deuxième portion de conduite 32, et/ou décollement du plot de réglage 7 du fond du cran dans lequel il est engagé. Cela permet de comprimer plus encore de manière étanche le premier joint J2 ou le deuxième joint J1 et simultanément par contre-réaction, le deuxième joint J1 ou le premier joint J2, sous l'action de la pression du fluide.

Le dispositif de maintien selon le premier aspect ou selon le deuxième aspect peut encore comporter les caractéristiques suivantes, prises seules ou en combinaison :
- un robinet d'arrêt Ra sur une conduite précèdent le tronçon amont, et/ou
- au moins une prise de purge Bp (notamment deux, l'une en amont et l'autre en aval de la soupape), mettant en communication l'intérieur et l'extérieur de la conduite du tronçon aval, et/ou
- une soupape Sp à fonction d'anti-retour dans une conduite prolongeant la conduite aval.

La présente invention concerne encore un équipement comportant un appareil de mesure Ap d'une caractéristique d'un fluide ou de mesure d'une caractéristique du milieu environnant, ledit appareil de mesure Ap présentant une tubulure d'entrée Tbe et une tubulure de sortie Tbs et un dispositif de maintien 1 selon le premier aspect ou encore selon le deuxième aspect comportant le tronçon amont 2 et le tronçon aval 3 destinés à être connectés de manière étanche, respectivement à la tubulure d'entrée Tbe et à la tubulure de sortie Tbs dudit appareil de mesure Ap.
La caractéristique du fluide peut être notamment un volume, un débit, une pression. La caractéristique du milieu environnant peut être un bruit ou une odeur. A titre d'exemple, l'appareil de mesure est un compteur volumétrique, tel qu'un compteur d'eau. Outre la mesure du volume, l'appareil peut comporter des capteurs de pression, H2S, bruit...

### Liste des signes de référence

- 1 : Dispositif de maintien,
- 2 : tronçon amont,
- 20. Portée d'appui,
- 21 : Portion de conduite fixe,
- 210,211 : Première rampe hélicoïdale et deuxième rampe hélicoïdale (première came),
- 212. Berceau,
- 213. Echancrure,
- 22 : Portion de conduite mobile,
- 220,221 : Troisième rampe hélicoïdale et quatrième rampe hélicoïdale (deuxième came),
- 222 : Surface soumise à la pression du fluide (opposée à la portée d'appui 20),
- 223 : Berceau,
- 224. Poignée de manœuvre,
- 225. Rebord de centrage,
- 226. Dégagement
- 3 : tronçon aval,
- 30. Portée d'appui,
- 31. Première portion de conduite (fixe),
- 32. Deuxième portion de conduite (mobile)
- 4. Support,
- 40 Appui (avec orifice)
- 5. Système de réglage et rattrapage du jeu,
- 6. Bague crantée,
- 60. Crans.
- 61. 62. Premier et deuxième chants (bague crantée 6)
- A : Axe longitudinal,
- Ap : appareil de mesure,
- Ec. Ecartement entre la première et la deuxième (Deuxième position déployée P2)
- J1. Premier joint,
- J2 : Deuxième joint,
- Pr : Position rétractée
- Tbe : tubulure d'entrée,
- Tbs : tubulure de sortie,
- P1 : Première position déployée (cames - première et deuxième en contact),
- P2 : Deuxième position déployée (cames- - première et deuxième écartées dudit écartement Ec)
   G. Gorge (de montage pour joint annulaire)
- Ra : Robinet d'arrêt,
- Bp : Prise de purge,
- Sp. Soupape

### Liste des documents cités

### Documents brevets

À toute fin utile, les documents brevets suivants sont cités :
- FR 2 786 863 A1;
- JP200517271 0 A.

## Revendications

1. Dispositif de maintien (1) d'un appareil (Ap) de mesure d'une caractéristique d'un fluide et/ou d'une caractéristique de l'environnement dudit appareil de mesure,
ledit dispositif de maintien comprenant :
- deux tronçons de conduite, les deux tronçons de conduite comprenant un tronçon amont (2) et un tronçon aval (3) destinés à être connectés de manière étanche, respectivement à une tubulure d'entrée (Tbe) et une tubulure de sortie (Tbs) de l'appareil de mesure, le fluide étant destiné à circuler sous pression depuis le tronçon amont (2) jusqu'au tronçon aval (3) en traversant la tubulure de l'appareil de mesure,
- le tronçon amont (2) et le tronçon aval (3) rigidement fixés à un même support (4), dont les conduites s'étendent suivant un même axe longitudinal (A), le tronçon amont (2) comportant une portée d'appui (20) destinée à être connectée de manière étanche au fluide à une portée de la tubulure d'entrée (Tbe) de l'appareil via un premier joint (J1), le tronçon aval (3) comportant une portée d'appui (30) destinée à être connectée de manière étanche au fluide à une portée de la tubulure de sortie (Tbs) de l'appareil via un deuxième joint (J2),
- le tronçon amont (2) ou encore aval (3), comportant une portion fixe de conduite (21) par rapport au support (4), et une portion de conduite mobile (22), prolongeant de manière étanche la portion de conduite fixe, la portion de conduite mobile (22) étant configurée pour être déplacée suivant deux degrés de liberté, y compris un premier degré de liberté en coulissement suivant l'axe longitudinal (A) et un deuxième degré de liberté en rotation autour dudit axe longitudinal (A), ladite portion de conduite mobile (22) embarquant la portée d'appui (20) configurée pour comprimer le premier joint (J1) ou encore le deuxième joint (J2),
**caractérise en ce que** la portion de conduite mobile (22) est configurée pour être pivotée par rapport à la portion de conduite fixe (21), par une rotation autour de l'axe longitudinal (A), selon une course angulaire limitée, inférieure à un tour, autour de l'axe longitudinal (A), la portion de conduite fixe (21) et la portion de conduite mobile (22) présentant respectivement une première came (210,211) et une seconde came (220, 221), mutuellement engageantes, les première et deuxième cames, étant configurées, lors du pivotement de la portion de conduite mobile (22) autour de l'axe longitudinal (A) selon la course angulaire limitée pour contraindre ladite portion de conduite mobile (22) d'une position rétractée (Pr), dans la portion de conduite fixe (21), autorisant le retrait ou la mise en place de l'appareil de mesure (Ap), jusqu'à une position déployée (P1) assurant la compression étanche du premier joint (J1) et du deuxième joint (J2).

2. Dispositif de maintien selon la revendication 1 dans lequel la portion de conduite mobile (22) comporte au moins une surface (222) soumise à l'action du fluide sous pression, située opposée à la portée d'appui (20) et de sorte que la portion mobile de conduite (22) est configurée, sous l'action de la pression du fluide supérieure à un seuil, pour autoriser et provoquer son coulissement par rapport à la portion de conduite fixe (21), suivant ledit axe longitudinal (A) depuis la position déployée, dite première position déployée (P1) pour laquelle la première came et la seconde came sont en contact jusqu'à une deuxième position déployée (P2), après perte de contact entre la première came (210,211) et de la seconde came (220,221) et création d'un écartement (Ec) entre la première came et la deuxième came, de sorte à comprimer plus encore de manière étanche le premier joint (J1) ou le deuxième joint (J2) et simultanément par contre-réaction, le deuxième joint (J2) ou le premier joint (J1), sous l'action de la pression du fluide.

3. Dispositif de maintien selon l'une des revendications 1 ou 2, dans lequel la portion de conduite mobile (22) comporte une portée de centrage, comprenant un berceau (223) s'étendant en saillie de la portée d'appui (20), ledit berceau étant configuré pour soutenir l'extrémité de la tubulure d'entrée (Tbe) ou de sortie de l'appareil de mesure (Ap) en étant positionné dans une position inférieure, dans la position rétractée (Pr) de la portion de conduite mobile (22),
et de sorte à autoriser le retrait ou la mise en place de l'extrémité de la tubulure d'entrée (Tbe) ou encore de sortie par un dégagement (226) diamétralement opposé au berceau (223) lorsque l'extrémité de la tubulure de sortie (Tbs) ou encore d'entrée de l'appareil est engagée dans une portée de centrage du tronçon opposé, aval (3) ou amont,
et qui, après pivotement de la portion de conduite mobile (22) autour de l'axe longitudinal (A) selon ladite course angulaire limitée, est configuré pour maintenir et centrer l'extrémité de la tubulure d'entrée (Tbe) alors disposée entre le berceau (223) de la portion de conduite mobile, alors supérieur dans la position déployée (P1) de la portion de conduite mobile (22) et un rebord (225) de centrage au niveau du dégagement (226).

4. Dispositif de maintien selon l'une des revendication 1 à 3, dans lequel le tronçon amont (2) ou le tronçon aval (3) comporte un système de réglage et de rattrapage du jeu (5), configuré pour régler l'écartement entre la portée d'appui (20) du tronçon amont et la portée d'appui (30) du tronçon aval, dans la position rétractée (Pr) de la portion de conduite mobile (22), préalablement à la compression du premier joint (J1) et du deuxième joint (J2) obtenu par le pivotement de la portion de conduite mobile (22) selon la course angulaire limitée.

5. Dispositif de maintien selon la revendication 4, ledit système de réglage et de rattrapage (5) du jeu comporte une bague crantée (6) comportant un premier chant d'appui (61) et éventuellement un deuxième chant d'appui (62) opposés, ainsi qu'une pluralité de crans (60) disposés en escalier le long du premier chant d'appui (61), ladite bague crantée (6) étant montée pivotante autour de l'axe longitudinal (A) sur le tronçon amont (2) ou sur le tronçon aval (3), et au moins un plot de réglage (7), configuré pour être reçu de manière amovible dans les crans de la bague crantée (6) en assurant plusieurs positions de réglage d'écartement, ladite bague crantée étant configurée pour permettre un réglage d'écartement entre une première portion de conduite et une deuxième portion de conduite (31,32) dudit tronçon amont ou du tronçon aval, mobiles selon l'axe longitudinal (A) l'une par rapport à l'autre, la deuxième portion de conduite (32) prolongeant de manière étanche la première portion de conduite (31), ledit plot de réglage (7) solidaire de la première portion de conduite (31), la bague crantée en appui, d'un côté via le premier chant d'appui (61) contre le plot de réglage (7), et de l'autre côté via le deuxième chant d'appui (62) contre la deuxième portion de conduite (32) lorsque la bague crantée (6) et la deuxième portion de conduite (32) sont deux éléments distincts selon une première possibilité, la bague crantée (6) solidaire de la deuxième portion de conduite (32) selon une seconde possibilité, le réglage étant obtenu par rotation de la bague crantée et jusqu'à positionner le plot de réglage (7) dans l'un desdits crans (60) de la bague crantée (6) assurant le réglage d'écartement souhaité.

6. Dispositif de maintien selon la revendication 5, dans lequel la première portion de conduite (31) est fixe, solidaire du support (4), la deuxième position de conduite (32) est mobile portant l'un des portée d'appui (30) du tronçon aval ou du tronçon amont, la deuxième de conduite mobile (32) comporte au moins une surface (322) soumise à l'action du fluide sous pression, située opposée à la portée d'appui (30) et de sorte que la deuxième portion de conduite (32) est configurée, sous l'action de la pression du fluide supérieure à un seuil, pour autoriser son coulissement par rapport à la première portion de conduite, suivant ledit axe longitudinal (A), depuis la position où la bague crantée est en contact avec la deuxième portion de conduite (32) par le deuxième chant d'appui (62) selon la première possibilité et/ ou le plot de réglage (7) est engagé contre le fond d'un cran (60) jusqu'à une position déployée après perte de contact entre la bague cranté (6) et la deuxième portion de conduite (32) selon la première possibilité, et/ou décollement du plot de réglage (7) du fond du cran (60) à l'intérieur duquel ledit plot de réglage est engagé selon la seconde possibilité, de sorte à comprimer plus encore de manière étanche le premier joint (J2) ou le deuxième joint (J1) et simultanément par contre-réaction, le deuxième joint (J1) ou le premier joint (J2), sous l'action de la pression du fluide.

7. Dispositif de maintien selon l'une des revendications 1 à 6, dans lequel ladite au moins une deuxième came (220,221) est agencée, suivant la direction axiale, du côté de la portion de conduite mobile (22) opposé à la portée d'appui (20) et dans lequel ladite au moins une première came (210,211) est matérialisée au niveau d'un épaulement de ladite portion de conduite fixe (210), à l'intérieur ladite la portion de conduite fixe (210).

8. Dispositif de maintien selon l'une des revendications 1 à 7, dans lequel la course angulaire limitée inférieure à 1 tour est comprise entre ¼ de tour et ¾ de tour, par exemple entre 1/3 de tour et 2/3 de tour, par exemple un demi-tour, autour de l'axe longitudinal (A).

9. Dispositif de maintien selon la revendication 8, dans lequel la course angulaire limitée est un demi-tour, ladite première came comportant une première rampe hélicoïdale (210) s'étendant sur une moitié du périmètre interne de la portion de conduite fixe (21), et une seconde rampe hélicoïdale (211) s'étendant sur l'autre moitié du périmètre interne de la portion de conduite fixe (21), coopérant avec la deuxième came, à savoir respectivement et simultanément avec une troisième rampe (220) s'étendant sur une moitié du périmètre de la portion de conduite fixe (21), et une quatrième rampe (221) s'étendant sur l'autre moitié du périmètre de la portion de conduite fixe (21).

10. Dispositif de maintien selon l'une des revendications 1 à 9, dans lequel la portion de conduite mobile (22) comprend une poignée de manœuvre (224), saillante vers l'extérieur, s'étendant radialement à la portion de conduite fixe (21).

11. Dispositif de maintien selon la revendication 10, dans lequel la portion de conduite (21) fixe comporte une portée de guidage pour la portion de conduite mobile (22), y compris un berceau (212), s'étendant inférieure, définissant une échancrure (213) supérieure au berceau (212) traversée par la poignée de manœuvre (224), ladite échancrure (213) autorisant la rotation de la poignée de manœuvre (224) selon la course angulaire limitée de la portion de conduite mobile (22) autour de l'axe longitudinal (A).

12. Dispositif de maintien selon l'une des revendications 1 à 11, dans lequel la course axiale de la portion de conduite mobile (22), suivant l'axe longitudinal (A) depuis la position rétractée (Pr) jusqu'à la position déployée (P1) est comprise entre 1 et 4 mm et de préférence entre 1 et 2 mm configurée pour comprimer de manière étanche au fluide les premier joint J1 et deuxième joint J2.

13. Dispositif de maintien (1) d'un appareil (Ap) de mesure d'une caractéristique d'un fluide et/ou du milieu environnant, ledit dispositif de maintien comprenant :
- deux tronçons de conduite, les deux tronçons de conduite comprenant un tronçon amont (2) et un tronçon aval (3) destinés à être connectés de manière étanche, respectivement à une tubulure d'entrée (Tbe) et une tubulure de sortie (Tbs) de l'appareil de mesure, le fluide étant destiné à circuler sous pression depuis le tronçon amont (2) jusqu'au tronçon aval (3) en traversant la tubulure de l'appareil de mesure,
- le tronçon amont (2) et le tronçon aval (3) rigidement fixés à un même support (4), dont les conduites s'étendent suivant un même axe longitudinal (A), le tronçon amont (2) comportant une portée d'appui (20) destinée à être connectée de manière étanche au fluide à une portée de la tubulure d'entrée (Tbe) de l'appareil de mesure (Ap) via un premier joint (J1), le tronçon aval (3) comportant une portée d'appui (30) destinée à être connectée de manière étanche au fluide à une portée de la tubulure de sortie (Tbs) de l'appareil de mesure (Ap) via un deuxième joint (J2),
- le tronçon amont (2) ou encore aval (3), comportant une première portion de conduite (31), fixe par rapport au support (4), et une deuxième portion de conduite mobile (32), portant la portée d'appui (30) du tronçon aval ou du tronçon amont, la deuxième portion de conduite (32) prolongeant de manière étanche la première portion de conduite (31), **caractérise en ce que**
la portion de conduite mobile (22) étant configurée pour être déplacée suivant au moins un degré de liberté en coulissement suivant l'axe longitudinal (A) et dans lequel un système de réglage et de rattrape (5) du jeu comprend une bague crantée (6) comportant un premier chant d'appui (61) et éventuellement un deuxième chant d'appui (62), opposés, ainsi qu'une pluralité de crans (60) disposés en escalier le long du premier chant d'appui (61), ladite bague crantée (6) étant montée pivotante autour de l'axe longitudinal (A) sur le tronçon amont (2) ou sur le tronçon aval (3), et au moins un plot de réglage (7), configuré pour être reçu de manière amovible dans les crans de la bague crantée (6) en assurant plusieurs positions de réglage d'écartement, ladite bague crantée étant configurée pour permettre un réglage d'écartement entre ladite première portion de conduite (31) et ladite deuxième portion de conduite (32), ledit plot de réglage (7) solidaire de la première portion de conduite (31), la bague crantée en appui, d'un côté via le premier chant d'appui (61) contre le plot de réglage (7), et de l'autre côté via le deuxième chant d'appui (62) contre la deuxième portion de conduite (32) lorsque la bague crantée (6) et la deuxième portion de conduite (32) sont deux éléments distincts selon une première possibilité, la bague crantée (6) solidaire de la deuxième portion de conduite (32) selon une seconde possibilité, le réglage étant obtenu par rotation de la bague crantée (6) et jusqu'à positionner le plot de réglage (7) dans l'un desdits crans de la bague crantée assurant le réglage d'écartement souhaité, ladite bague crantée (6) étant configurée pour contraindre ladite deuxième portion de conduite (32) d'une position rétractée, autorisant le retrait ou la mise en place de l'appareil de mesure (Ap), jusqu'à une position déployée assurant la compression étanche du premier joint (J1) et du deuxième joint (J2).

14. Dispositif de maintien selon la revendication 13, dans lequel la deuxième de conduite mobile (32) comporte au moins une surface (322) soumise à l'action du fluide sous pression, située opposée à la portée d'appui (30) portée par la deuxième portion de conduite (32) et de sorte que la deuxième portion de conduite (32) est configurée, sous l'action de la pression du fluide supérieure à un seuil, pour autoriser et provoquer son coulissement par rapport à la première portion de conduite (31), suivant ledit axe longitudinal (A), depuis la position où la bague crantée (6) est en contact avec la deuxième portion de conduite (32) par le second chant d'appui (62) selon la première possibilité et/ ou le plot de réglage (7) est engagé contre le fond d'un cran (60) jusqu'à une position déployée après perte de contact entre la bague cranté (6) et la deuxième portion de conduite (32) selon la première possibilité, et/ou décollement du plot de réglage (7) du fond du cran (60) à l'intérieur duquel ledit plot de réglage est engagé selon la seconde possibilité, de sorte à comprimer plus encore de manière étanche le premier joint (J2) ou le deuxième joint (J1) et simultanément par contre-réaction, le deuxième joint (J1) ou le premier joint (J2), sous l'action de la pression du fluide.

15. Dispositif de maintien selon l'une des revendications 1 à 14 comportant les caractéristiques suivantes, prises seules ou en combinaison :
- un robinet d'arrêt (Ra) sur une conduite précèdent le tronçon amont, et/ou
- au moins une prise de purge (Bp), mettant en communication l'intérieur et l'extérieur de la conduite du tronçon aval, et/ou
- une soupape (Sp) à fonction d'anti-retour dans une conduite prolongeant la conduite aval.

16. Equipement comportant un appareil de mesure (Ap) d'une caractéristique d'un fluide ou du milieu environnant, ledit appareil de mesure (Ap) présentant une tubulure d'entrée (Tbe) et une tubulure de sortie (Tbs) et un dispositif de maintien (1) selon l'une des revendications 1 à 15 comportant le tronçon amont (2) et le tronçon aval (3) destinés à être connectés de manière étanche, respectivement à la tubulure d'entrée (Tbe) et à la tubulure de sortie (Tbs) dudit appareil de mesure (Ap).

17. Equipement selon la revendication 16, dans lequel l'appareil de mesure est un compteur volumétrique, tel qu'un compteur d'eau.

## Patentansprüche

1. Haltevorrichtung (1) für ein Gerät (Ap) zur Messung einer Eigenschaft eines Fluids und/oder einer Eigenschaft der Umgebung des Messgeräts,
wobei die Haltevorrichtung umfasst:
- zwei Leitungsabschnitte, wobei die beiden Leitungsabschnitte einen stromaufwärtigen Abschnitt (2) und einen stromabwärtigen Abschnitt (3) umfassen, die dazu bestimmt sind, jeweils dicht mit einem Eingangsanschluss (Tbe) und einem Ausgangsanschluss (Tbs) des Messgeräts verbunden zu sein, wobei das Fluid dazu bestimmt ist, unter Druck vom stromaufwärtigen Abschnitt (2) zum stromabwärtigen Abschnitt (3) durch den Anschluss des Messgeräts zu strömen,
- wobei der stromaufwärtige Abschnitt (2) und der stromabwärtige Abschnitt (3) fest an einem gleichen Träger (4) befestigt sind, dessen Leitungen sich entlang einer gleichen Längsachse (A) erstrecken, wobei der stromaufwärtige Abschnitt (2) eine Auflagefläche (20) aufweist, die dazu bestimmt ist, über eine erste Dichtung (J1) fluiddicht mit einem Bereich des Eingangsanschlusses (Tbe) des Geräts verbunden zu sein, wobei der stromabwärtige Abschnitt (3) eine Auflagefläche (30) aufweist, die dazu bestimmt ist, über eine zweite Dichtung (J2) fluiddicht mit einem Bereich des Ausgangsanschlusses (Tbs) des Geräts verbunden zu sein,
- wobei der stromaufwärtige Abschnitt (2) oder auch der stromabwärtige Abschnitt (3) einen in Bezug auf den Träger (4) feststehenden Leitungsabschnitt (21) aufweisen, und einen beweglichen Leitungsabschnitt (22), der den feststehenden Leitungsabschnitt dicht verlängert, wobei der bewegliche Leitungsabschnitt (22) dazu ausgebildet ist, in zwei Freiheitsgraden verschiebbar zu sein, einschließlich eines ersten Freiheitsgrades gleitend in Richtung der in Längsachse (A) und eines zweiten Freiheitsgrades drehend um die Längsachse (A), wobei der bewegliche Leitungsabschnitt (22) die Auflagefläche (20) aufweist, die dazu ausgebildet ist, die erste Dichtung (J1) oder die zweite Dichtung (J2) zusammenzudrücken, **dadurch gekennzeichnet, dass** der bewegliche Leitungsabschnitt (22) dazu ausgebildet ist, relativ zum feststehenden Leitungsabschnitt (21) durch eine Drehung um die Längsachse (A) um einen begrenzten Winkelhub, der kleiner als eine Umdrehung ist, um die Längsachse (A) geschwenkt zu werden, wobei der feststehende Leitungsabschnitt (21) und der bewegliche Leitungsabschnitt (22) jeweils einen ersten Nocken (210, 211) und einen zweiten Nocken (220, 221) aufweisen, die ineinander greifen, wobei der erste und der zweite Nocken dazu ausgebildet sind, beim Schwenken des beweglichen Leitungsabschnitts (22) um die Längsachse (A) um den begrenzten Winkelhub den beweglichen Leitungsabschnitt (22) aus einer zurückgezogenen Position (Pr) in den feststehenden Leitungsabschnitt (21) zu zwingen, wodurch das Entfernen oder Einsetzen des Messgeräts (Ap) bis in eine ausgefahrene Position (P1) ermöglicht wird, die ein dichtes Zusammendrücken der ersten Dichtung (J1) und der zweiten Dichtung (J2) gewährleistet.

2. Haltevorrichtung nach Anspruch 1, wobei der bewegliche Leitungsabschnitt (22) wenigstens eine Fläche (222) aufweist, die der Wirkung des unter Druck stehenden Fluids ausgesetzt ist, die der Auflagefläche (20) gegenüberliegt und so, dass der bewegliche Leitungsabschnitt (22) dazu ausgebildet ist, unter der Einwirkung des über einen Schwellenwert erhöhten Fluiddrucks sein Gleiten gegenüber dem feststehenden Leitungsabschnitt (21) zu ermöglichen und zu bewirken, entlang der Längsachse (A) aus der ausgefahrenen Position, als erste ausgefahrene Position (P1) bezeichnet, in der der erste Nocken und der zweite Nocken in Kontakt stehen, bis zu einer zweiten ausgefahrenen Position (P2), nach Verlust des Kontakts zwischen dem ersten Nocken (210, 211) und dem zweiten Nocken (220, 221) und Entstehung eines Abstands (Ec) zwischen dem ersten Nocken und dem zweiten Nocken, so dass die erste Dichtung (J1) oder die zweite Dichtung (J2) und gleichzeitig durch Gegenwirkung die zweite Dichtung (J2) oder die erste Dichtung (J1) unter der Wirkung des Fluiddrucks noch stärker dicht zusammengedrückt werden.

3. Haltevorrichtung nach einem der Ansprüche 1 oder 2, wobei der bewegliche Leitungsabschnitt (22) eine Zentrierfläche aufweist, die eine sich von der Auflagefläche (20) vorstehend erstreckende Rundung (223) umfasst, wobei die Rundung dazu ausgebildet ist, das Ende des Eingangsanschlusses (Tbe) oder des Ausgangsanschlusses des Messgerätes (Ap) in einer unteren Position in der zurückgezogenen Position (Pr) des beweglichen Leitungsabschnitts (22) zu stützen und so das Herausziehen oder Einsetzen des Endes des Eingangsanschlusses (Tbe) oder des Ausgangsanschlusses durch einen der Rundung (223) diametral gegenüberliegenden Freiraum (226) zu ermöglichen, wenn das Ende des Ausgangsanschlusses (Tbs) oder des Eingangsanschlusses des Geräts in eine Zentrierfläche des gegenüberliegenden, stromabwärts (3) oder stromaufwärtigen Abschnitts eingreift,
und der, nach Schwenken des beweglichen Leitungsabschnitts (22) um die Längsachse (A) um den begrenzten Winkelhub, dazu ausgebildet ist, das Ende des Eingangsanschlusses (Tbe), das dann zwischen der in der ausgefahrenen Position (P1) des beweglichen Leitungsabschnitts (22) oberen Rundung (223) des beweglichen Leitungsabschnitts und einem Zentrierrand (225) in Höhe des Freiraums (226) angeordnet ist, zu halten und zu zentrieren.

4. Haltevorrichtung nach einem der Ansprüche 1 bis 3, wobei der stromaufwärtige Abschnitt (2) oder der stromabwärtige Abschnitt (3) ein Spielausgleichs- und Einstellsystem (5) aufweist, das dazu ausgebildet ist, den Abstand zwischen der Auflagefläche (20) des stromaufwärtigen Abschnitts und der Auflagefläche (30) des stromabwärtigen Abschnitts in der zurückgezogenen Position (Pr) des beweglichen Leitungsabschnitts (22) vor dem Zusammendrücken der ersten Dichtung (J1) und der zweiten Dichtung (J2), das durch Schwenken des beweglichen Leitungsabschnitts (22) um den begrenzten Winkelhub erreicht wird, einzustellen.

5. Haltevorrichtung nach Anspruch 4, wobei das Spielausgleichs- und Einstellsystem (5) einen Rastring (6) mit einer ersten (61) und gegebenenfalls einer zweiten gegenüberliegenden Auflagekante (62) umfasst, sowie mehrere entlang der ersten Auflagekante (61) stufenförmig angeordnete Rastungen (60) aufweist, wobei der Rastring (6) um die Längsachse (A) am stromaufwärtigen Abschnitt (2) oder am stromabwärtigen Abschnitt (3) schwenkbar gelagert ist, und wenigstens einen Einstellblock (7), der dazu ausgebildet ist, lösbar in die Rastungen des Rastrings (6) aufgenommen zu sein und mehrere Einstellpositionen für den Abstand gewährleistet, wobei der Rastring dazu ausgebildet ist, eine Abstandseinstellung zwischen einem ersten Leitungsabschnitt und einem zweiten Leitungsabschnitt (31, 32) des stromaufwärtigen oder des stromabwärtigen Abschnitts zu ermöglichen, die entlang der Längsachse (A) zueinander beweglich sind, wobei der zweite Leitungsabschnitt (32) den ersten Leitungsabschnitt (31) dicht verlängert, wobei der Einstellblock (7) fest mit dem ersten Leitungsabschnitt (31) verbunden ist, wobei der Rastring auf einer Seite über die erste Auflagekante (61) gegen den Einstellblock (7) und auf der anderen Seite über die zweite Auflagekante (62) gegen den zweiten Leitungsabschnitt (32) anliegt, wenn der Rastring (6) und der zweite Leitungsabschnitt (32) gemäß einer ersten Möglichkeit zwei getrennte Elemente sind und gemäß einer zweiten Möglichkeit der Rastring (6) fest mit dem zweiten Leitungsabschnitt (32) verbunden ist, wobei die Einstellung durch Drehen des Rastrings erhalten wird bis der Einstellblock (7) in einer der Rastungen (60) des Rastrings (6) positioniert ist, die den gewünschten Abstand einstellt.

6. Haltevorrichtung nach Anspruch 5, wobei der erste Leitungsabschnitt (31) fest mit dem Träger (4) verbunden ist, der zweite Leitungsabschnitt (32) beweglich ist und eine der Auflageflächen (30) des stromabwärtigen Abschnitts oder des stromaufwärtigen Abschnitts trägt, wobei der zweite bewegliche Leitungsabschnitt (32) wenigstens eine Fläche (322) aufweist, die der Wirkung des unter Druck stehenden Fluids ausgesetzt ist und gegenüber der Auflagefläche (30) angeordnet ist, so dass der zweite Leitungsabschnitt (32) dazu ausgebildet ist, unter Einwirkung des auf einen Schwellenwert erhöhten Fluiddrucks ein Verschieben gegenüber dem ersten Leitungsabschnitt entlang der Längsachse (A) zu ermöglichen, aus der Position, in der der Rastring mit dem zweiten Leitungsabschnitt (32) über die zweite Auflagekante (62) gemäß der ersten Möglichkeit in Kontakt steht und/oder der Einstellblock (7) nach Verlust des Kontakts zwischen dem Rastring (6) und dem zweiten Leitungsabschnitt (32) nach der ersten Möglichkeit bis zu einer ausgefahrenen Position gegen den Boden einer Rastung (60) eingreift und/oder sich der Einstellblock (7) vom Boden der Rastung (60) löst, in die der Einstellblock gemäß der zweiten Möglichkeit eingreift, so dass die erste Dichtung (J2) oder die zweite Dichtung (J1) und gleichzeitig durch Gegenwirkung die zweite Dichtung (J1) oder die erste Dichtung (J2) unter der Wirkung des Fluiddrucks noch stärker dicht zusammengedrückt werden.

7. Haltevorrichtung nach einem der Ansprüche 1 bis 6, wobei der wenigstens eine zweite Nocken (220, 221) in axialer Richtung auf der der Auflagefläche (20) gegenüberliegenden Seite des beweglichen Leitungsabschnitts (22) angeordnet ist und wobei der wenigstens eine erste Nocken (210, 211) an einer Schulter des feststehenden Leitungsabschnitts (210) innerhalb des feststehenden Leitungsabschnitts (210) ausgebildet ist.

8. Haltevorrichtung nach einem der Ansprüche 1 bis 7, wobei der begrenzte Winkelhub von weniger als 1 Umdrehung zwischen 1/4 einer Umdrehung und 3/4 einer Umdrehung, beispielsweise zwischen 1/3 einer Umdrehung und 2/3 einer Umdrehung, beispielsweise bei einer halben Umdrehung, um die Längsachse (A) liegt.

9. Haltevorrichtung nach Anspruch 8, wobei der begrenzte Winkelhub eine halbe Umdrehung beträgt, wobei der erste Nocken eine erste spiralförmige Rampe (210) aufweist, die sich über die Hälfte des Innenumfangs des feststehenden Leitungsabschnitts (21) erstreckt, und eine zweite spiralförmige Rampe (211) aufweist, die sich über die andere Hälfte des Innenumfangs des feststehenden Leitungsabschnitts (21) erstreckt und mit dem zweiten Nocken zusammenwirkt, und zwar jeweils gleichzeitig mit einer dritten Rampe (220), die sich über eine Hälfte des Umfangs des feststehenden Leitungsabschnitts (21) erstreckt, und einer vierten Rampe (221), die sich über die andere Hälfte des Umfangs des feststehenden Leitungsabschnitts (21) erstreckt.

10. Haltevorrichtung nach einem der Ansprüche 1 bis 9, wobei der bewegliche Leitungsabschnitt (22) einen nach außen vorstehenden, sich radial zum feststehenden Leitungsabschnitt (21) erstreckenden Betätigungsgriff (224) aufweist.

11. Haltevorrichtung nach Anspruch 10, wobei der feststehende Leitungsabschnitt (21) eine Führungsaufnahme für den beweglichen Leitungsabschnitt (22) aufweist, einschließlich einer Rundung (212), die sich nach unten erstreckt und eine obere Aussparung (213) an der Rundung (212) bildet, die vom Betätigungsgriff (224) durchsetzt ist, wobei die Aussparung (213) eine Drehung des Betätigungsgriffs (224) entsprechend der begrenzten Winkelhubbewegung des beweglichen Leitungsabschnitts (22) um die Längsachse (A) ermöglicht.

12. Haltevorrichtung nach einem der Ansprüche 1 bis 11, wobei die axiale Bewegung des beweglichen Leitungsabschnitts (22), entlang der Längsachse (A) aus der zurückgezogenen Position (Pr) in die ausgefahrene Position (P1) zwischen 1 und 4 mm und bevorzugt zwischen 1 und 2 mm beträgt und dazu ausgebildet ist, die erste Dichtung J1 und die zweite Dichtung J2 fluiddicht zusammenzudrücken.

13. Haltevorrichtung (1) für ein Gerät (Ap) zur Messung einer Eigenschaft eines Fluids und/oder der Umgebung, wobei die Haltevorrichtung umfasst:
- zwei Leitungsabschnitte, wobei die beiden Leitungsabschnitte einen stromaufwärtigen Abschnitt (2) und einen stromabwärtigen Abschnitt (3) umfassen, die dazu bestimmt sind, jeweils dicht mit einem Eingangsanschluss (Tbe) und einem Ausgangsanschluss (Tbs) des Messgeräts verbunden zu sein, wobei das Fluid dazu bestimmt ist, unter Druck vom stromaufwärtigen Abschnitt (2) zum stromabwärtigen Abschnitt (3) durch den Anschluss des Messgeräts zu strömen,
- wobei der stromaufwärtige Abschnitt (2) und der stromabwärtige Abschnitt (3) fest an einem gleichen Träger (4) befestigt sind, dessen Leitungen sich entlang einer gleichen Längsachse (A) erstrecken, wobei der stromaufwärtige Abschnitt (2) eine Auflagefläche (20) aufweist, die dazu bestimmt ist, über eine erste Dichtung (D1) fluiddicht mit einem Bereich des Eingangsanschluss (Tbs) des Messgeräts (Ap) verbunden zu sein, wobei der stromabwärtige Abschnitt (3) eine Auflagefläche (30) aufweist, die dazu bestimmt ist, fluiddicht mit dem Fluid an einer Auflagefläche des Ausgangsanschluss (Tbs) des Messgeräts (Ap) verbunden zu sein,
- wobei der stromaufwärtige Abschnitt (2) oder auch der stromabwärtige Abschnitt (3) einen in Bezug auf den Träger (4) feststehenden ersten Leitungsabschnitt (31) umfassen, und einen zweiten beweglichen Leitungsabschnitt (32) aufweist, der die Auflagefläche (30) des stromaufwärtigen Abschnitts oder des stromabwärtigen Abschnitts trägt, wobei der zweite Leitungsabschnitt (32) den ersten Leitungsabschnitt (31) dicht verlängert,
**dadurch gekennzeichnet, dass** der bewegliche Leitungsabschnitt (22) dazu ausgebildet ist, gemäß wenigstens einem Freiheitsgrad entlang der Längsachse (A) verschiebbar zu sein, und wobei ein Spielausgleichs- und Einstellsystem (5) einen Rastring (6) mit einer ersten Auflagekante (61) und gegebenenfalls einer zweiten Auflagekante (62) umfasst, die einander gegenüberliegen, sowie eine Mehrzahl von Rastungen (60), die entlang der ersten Auflagekante (61) stufenförmig angeordnet sind, wobei der Rastring (6) am stromaufwärtigen Abschnitt (2) oder am stromabwärtigen Abschnitt (3) um die Längsachse (A) schwenkbar gelagert ist, und wenigstens einen Einstellblock (7), der dazu ausgebildet ist, lösbar in die Rastungen des Rastrings (6) aufgenommen zu sein und mehrere Einstellpositionen für den Abstand zu gewährleisten, wobei der Rastring dazu ausgebildet ist, eine Einstellung des Abstands zwischen dem ersten Leitungsabschnitt (31) und dem zweiten Leitungsabschnitt (32) zu ermöglichen, wobei der Einstellblock (7) fest mit dem ersten Leitungsabschnitt (31) verbunden ist, der Rastring auf der einen Seite über die erste Auflagekante (61) gegen den Einstellblock (7) und auf der anderen Seite über die zweite Auflagekante (62) gegen den zweiten Leitungsabschnitt (32) anliegt, wenn der Rastring (6) und der zweite Leitungsabschnitt (32) gemäß einer ersten Möglichkeit zwei getrennte Elemente sind, wobei der Rastring (6) gemäß einer zweiten Möglichkeit fest mit dem zweiten Leitungsabschnitt (32) verbunden ist und die Einstellung durch Drehen des Rastrings (6) bis zum Positionieren des Einstellblocks (7) in einer der Rastungen des Rastrings erfolgt, die die gewünschte Abstandseinstellung gewährleistet, wobei der Rastring (6) dazu ausgebildet ist, den zweiten Leitungsabschnitt (32) aus einer zurückgezogenen Position, in der das Entfernen oder Einsetzen des Messgeräts (Ap) möglich ist, in eine ausgefahrene Position zu zwingen, in der die erste Dichtung (J1) und die zweite Dichtung (J2) dicht zusammengedrückt werden.

14. Haltevorrichtung nach Anspruch 13, wobei der zweite bewegliche Leitungsabschnitt (32) wenigstens eine Fläche (322) aufweist, die der Wirkung des unter Druck stehenden Fluids ausgesetzt ist und gegenüber der vom zweiten Leitungsabschnitt (32) getragenen Auflagefläche (30) angeordnet ist, so dass der zweite Leitungsabschnitt (32) dazu ausgebildet ist, unter der Einwirkung eines über einen Schwellenwert erhöhten Fluiddrucks ein Verschieben des zweiten Leitungsabschnitts (31) gegenüber dem ersten Leitungsabschnitt (31) zu ermöglichen und zu bewirken, entlang der Längsachse (A) aus der Position, in der der Rastring (6) mit dem zweiten Leitungsabschnitt (32) über die zweite Auflagekante (62) in Kontakt steht, gemäß der ersten Möglichkeit und/oder der Einstellblock (7) gegen den Boden einer Rastung (60) in Eingriff ist, bis zu einer ausgefahrene Position nach Verlust des Kontakts zwischen dem Rastring (6) und dem zweiten Leitungsabschnitt (32) gemäß der ersten Möglichkeit und/oder Ablösen des Einstellblocks (7) vom Boden der Rastung (60) in der der Einstellblock gemäß der zweiten Möglichkeit in Eingriff ist, so dass die erste Dichtung (J2) oder die zweite Dichtung (J1) und gleichzeitig durch Gegenwirkung die zweite Dichtung (J1) oder die erste Dichtung (J2) unter der Wirkung des Fluiddrucks noch stärker dicht zusammengedrückt werden.

15. Haltevorrichtung nach einem der Ansprüche 1 bis 14 mit folgenden Merkmalen, die einzeln oder in Kombination vorliegen können:
- ein Absperrventil (Ra) an einer Leitung vor dem stromaufwärtigen Abschnitt und/oder
- wenigstens ein Entlüftungsanschluss (Bp), der das Innere und das Äußere der Leitung des stromabwärtigen Abschnitts miteinander verbindet, und/oder
- ein Rückschlagventil (Sp) in einer die stromabwärtige Leitung verlängernden Leitung.

16. Vorrichtung, umfassend ein Messgerät (Ap) für eine Eigenschaft eines Fluids oder der Umgebung, wobei das Messgerät (Ap) einen Eingangsanschluss (Tbe) und einen Ausgangsanschluss (Tbs) sowie eine Haltevorrichtung (1) nach einem der Ansprüche 1 bis 15 aufweist, mit einem stromaufwärtigen Abschnitt (2) und einem stromabwärtigen Abschnitt (3), die dazu bestimmt sind, jeweils dicht mit dem Eingangsanschluss (Tbe) und dem Ausgangsanschluss (Tbs) des Messgeräts (Ap) verbunden zu sein.

17. Vorrichtung nach Anspruch 16, wobei das Messgerät ein Volumenzähler, beispielsweise ein Wasserzähler, ist.

## Claims

1. A device (1) for holding an apparatus (Ap) for measuring a characteristic of a fluid and/or a characteristic of the environment of said measuring apparatus,
said holding device comprising:
- two pipe sections, the two pipe sections comprising an upstream section (2) and a downstream section (3) intended to be sealingly connected, respectively, to an inlet tube (Tbe) and an outlet tube (Tbs) of the measuring apparatus, the fluid being intended to circulate under pressure from the upstream section (2) to the downstream section (3) throughout the tube of the measuring apparatus,
- the upstream section (2) and the downstream section (3) rigidly fastened to a same support (4), whose pipes extend along a same longitudinal axis (A), the upstream section (2) including a bearing seat (20) intended to be sealingly connected to a bearing seat of the inlet tube (Tbe) of the apparatus via a first seal (J1), the downstream section (3) including a bearing seat (30) intended to be connected in a fluid-tight manner to a bearing seat of the outlet tube (Tbs) of the apparatus via a second seal (J2),
- the upstream (2), or downstream (3), section, including a pipe portion (21) fixed relative to the support (4), and a movable pipe portion (22), sealingly extending the fixed pipe portion, the movable pipe portion (22) being configured to be moved according to two degrees of freedom, including a first degree of freedom slidingly along the longitudinal axis (A) and a second degree of freedom rotatably about said longitudinal axis (A), said movable pipe portion (22) embedding the bearing seat (20) configured to compress the first seal (J1) or the second seal (J2),
**characterised in that**
the movable pipe portion (22) is configured to be pivoted relative to the fixed pipe portion (21), by rotation about the longitudinal axis (A), according to a limited angular travel, of less than one revolution, about the longitudinal axis (A), the fixed pipe portion (21) and the movable pipe portion (22) having a first cam (210,211) and a second cam (220, 221), respectively, mutually engaging, the first and second cams, being configured, during pivoting of the movable pipe portion (22) about the longitudinal axis (A) according to the limited angular travel, to constrain said movable pipe portion (22) from a retracted position (Pr), in the fixed pipe portion (21), enabling removal or installation of the measuring apparatus (Ap), to a deployed position (P1) ensuring the sealed compression of the first seal (J1) and of the second seal (J2).

2. The holding device according to claim 1, wherein the movable pipe portion (22) includes at least one surface (222) subjected to the action of the pressurised fluid, located opposite to the bearing seat (20) and so that the movable pipe portion (22) is configured, under the action of the pressure of the fluid higher than a threshold, to enable and cause sliding thereof relative to the fixed pipe portion (21), along said longitudinal axis (A) from the deployed position, so-called first deployed position (P1) for which the first cam and the second cam are in contact to a second deployed position (P2), after loss of contact between the first cam (210,211) and the second cam (220,221) and creation of a gap (Ec) between the first cam and the second cam, so as to sealingly compress even further the first seal (J1) or the second seal (J2) and simultaneously, by counter-reaction, the second seal (J2) or the first seal (J1), under the action of the pressure of the fluid.

3. The holding device according to one of claims 1 or 2, wherein the movable pipe portion (22) includes a centring seat, comprising a cradle (223) extending projecting from the bearing seat (20), said cradle being configured to support the end of the inlet (Tbe) or outlet tube of the measuring apparatus (Ap) while being positioned in a lower position, in the retracted position (Pr) of the movable pipe portion (22),
and so as to enable removal or installation of the end of the inlet (Tbe) or outlet tube via a clearance (226) diametrically opposite to the cradle (223) when the end of the outlet (Tbs) or inlet tube of the apparatus is engaged in a centring seat of the opposite, downstream (3) or upstream, section,
and which, after pivoting of the movable pipe portion (22) about the longitudinal axis (A) according to said limited angular travel, is configured to hold and centre the end of the inlet tube (Tbe) then disposed between the cradle (223) of the movable pipe portion, then at the top in the deployed position (P1) of the movable pipe portion (22), and a centring flange (225) at the clearance (226).

4. The holding device according to one of claims 1 to 3, wherein the upstream section (2) or the downstream section (3) includes a system for adjusting and compensating for the backlash (5), configured to adjust the gap between the bearing seat (20) of the upstream section and the bearing seat (30) of the downstream section, in the retracted position (Pr) of the movable pipe portion (22), prior to the compression of the first seal (J1) and of the second seal (J2) obtained by pivoting of the movable pipe portion (22) according to the limited angular travel.

5. The holding device according to claim 4, said system for adjusting and compensating for the backlash (5) includes a notched ring (6) including a first bearing edge (61) and possibly a second bearing edge (62) opposite to each other, as well as a plurality of notches (60) arranged in a staggered manner along the first bearing edge (61), said notched ring (6) being pivotably mounted about the longitudinal axis (A) on the upstream section (2) or on the downstream section (3), and at least one adjustment stud (7), configured to be removably received in the notches of the notched ring (6) while ensuring several gap adjustment positions, said notched ring being configured to enable a gap adjustment between a first pipe portion and a second pipe portion (31,32) of said upstream section or of the downstream section, movable along the longitudinal axis (A) relative to one another, the second pipe portion (32) sealingly extending the first pipe portion (31), said adjustment stud (7) secured to the first pipe portion (31), the notched ring bearing, on one side via the first bearing edge (61) against the adjustment stud (7), and on the other side via the second bearing edge (62) against the second pipe portion (32) when the notched ring (6) and the second pipe portion (32) are two separate elements according to a first possibility, the notched ring (6) secured to the second pipe portion (32) according to a second possibility, the adjustment being obtained by rotation of the notched ring and until positioning the adjustment stud (7) in one of said notches (60) of the notched ring (6) ensuring the desired gap adjustment.

6. The holding device according to claim 5, wherein the first pipe portion (31) is fixed, secured to the support (4), the second pipe position (32) is movable bearing one of the bearing seats (30) of the downstream section or of the upstream section, the second movable pipe (32) includes at least one surface (322) subjected to the action of the fluid under pressure, located opposite to the bearing seat (30) and so that the second pipe portion (32) is configured, under the action of the pressure of the fluid higher than a threshold, to enable sliding thereof relative to the first pipe portion, along said longitudinal axis (A), from the position where the notched ring is in contact with the second pipe portion (32) by the second bearing edge (62) according to the first possibility and/or the adjustment stud (7) is engaged against the bottom of a notch (60) to a deployed position after loss of contact between the notched ring (6) and the second pipe portion (32) according to the first possibility, and/or detachment of the adjustment stud (7) from the bottom of the notch (60) within which said adjustment stud is engaged according to the second possibility, so as to sealingly compress even further the first seal (J2) or the second seal (J1) and simultaneously, by counter-reaction, the second seal (J1) or the first seal (J2), under the action of the pressure of the fluid.

7. The holding device according to one of claims 1 to 6, wherein said at least one second cam (220,221) is arranged, according to the axial direction, on the side of the movable pipe portion (22) opposite to the bearing seat (20) and wherein said at least one first cam (210,211) is materialised at a shoulder of said fixed pipe portion (210), inside said fixed pipe portion (210).

8. The holding device according to one of claims 1 to 7, wherein the angular travel limited to less than 1 revolution is comprised between ¼ of a revolution and 3/4 of a revolution, for example between 1/3 of a revolution and 2/3 of a revolution, for example half a revolution, about the longitudinal axis (A).

9. The holding device according to claim 8, wherein the limited angular travel is a half-revolution, said first cam including a first helical ramp (210) extending over one half of the inner perimeter of the fixed pipe portion (21), and a second helical ramp (211) extending over the other half of the inner perimeter of the fixed pipe portion (21), cooperating with the second cam, namely respectively and simultaneously with a third ramp (220) extending over one half of the perimeter of the fixed pipe portion (21), and a fourth ramp (221) extending over the other half of the perimeter of the fixed pipe portion (21).

10. The holding device according to one of claims 1 to 9, wherein the movable pipe portion (22) comprises a manoeuvring handle (224), projecting outwardly, extending radially to the fixed pipe portion (21).

11. The holding device according to claim 10, wherein the fixed pipe portion (21) includes a guide seat for the movable pipe portion (22), including a cradle (212), extending at the bottom, defining a notch (213) above the cradle (212) crossed by the manoeuvring handle (224), said notch (213) enabling rotation of the manoeuvring handle (224) according to the limited angular travel of the movable pipe portion (22) about the longitudinal axis (A).

12. The holding device according to one of claims 1 to 11, wherein the axial travel of the movable pipe portion (22), along the longitudinal axis (A) from the retracted position (Pr) to the deployed position (P1) is comprised between 1 and 4 mm and preferably between 1 and 2 mm configured to compress the first seal J1 and the second seal J2 in a fluid-tight manner.

13. A device (1) for holding an apparatus (Ap) for measuring a characteristic of a fluid and/or of the surrounding environment, said holding device comprising:
- two pipe sections, the two pipe sections comprising an upstream section (2) and a downstream section (3) intended to be sealingly connected, respectively, to an inlet tube (Tbe) and an outlet tube (Tbs) of the measuring apparatus, the fluid being intended to circulate under pressure from the upstream section (2) to the downstream section (3) throughout the tube of the measuring apparatus,
- the upstream section (2) and the downstream section (3) rigidly fastened to a same support (4), whose pipes extend along a same longitudinal axis (A), the upstream section (2) including a bearing seat (20) intended to be connected in a fluid-tight manner to a seat of the inlet tube (Tbe) of the measuring apparatus (Ap) via a first seal (J1), the downstream section (3) including a bearing seat (30) intended to be sealingly connected to a seat of the outlet tube (Tbs) of the measuring apparatus (Ap) via a second seal (J2),
- the upstream (2), or downstream (3), section including a first pipe portion (31), fixed with respect to the support (4), and a second movable pipe portion (32), bearing the bearing seat (30) of the downstream section or of the upstream section, the second pipe portion (32) sealingly extending the first pipe portion (31), **characterised in that**
the movable pipe portion (22) being configured to be moved according to at least one degree of freedom slidingly along the longitudinal axis (A) and wherein a system for adjusting and compensating (5) for the backlash comprises a notched ring (6) including a first bearing edge (61) and possibly a second bearing edge (62), opposite to each other, as well as a plurality of notches (60) arranged in a staggered manner along the first bearing edge (61), said notched ring (6) being pivotably mounted about the longitudinal axis (A) on the upstream section (2) or on the downstream section (3), and at least one adjustment stud (7), configured to be removably received in the notches of the notched ring (6) while ensuring several gap adjustment positions, said notched ring being configured to enable a gap adjustment between said first pipe portion (31) and said second pipe portion (32), said adjustment stud (7) secured to the first pipe portion (31), the notched ring bearing, on one side via the first bearing edge (61) against the adjustment stud (7), and on the other side via the second bearing edge (62) against the second pipe portion (32) when the notched ring (6) and the second pipe portion (32) are two separate elements according to a first possibility, the notched ring (6) secured to the second pipe portion (32) according to a second possibility, the adjustment being obtained by rotation of the notched ring (6) and until positioning the adjustment stud (7) in one of said notches of the notched ring ensuring the desired gap adjustment, said notched ring (6) being configured to constrain said second pipe portion (32) from a retracted position, enabling removal or installation of the measuring apparatus (Ap), to a deployed position ensuring the sealed compression of the first seal (J1) and of the second seal (J2).

14. The holding device according to claim 13, wherein the second movable pipe (32) includes at least one surface (322) subjected to the action of the fluid under pressure, located opposite to the bearing seat (30) borne by the second pipe portion (32) and so that the second pipe portion (32) is configured, under the action of the pressure of the fluid higher than a threshold, to enable and cause sliding thereof relative to the first pipe portion (31), along said longitudinal axis (A), from the position where the notched ring (6) is in contact with the second pipe portion (32) by the second bearing edge (62) according to the first possibility and/or the adjustment stud (7) is engaged against the bottom of a notch (60) to a deployed position after loss of contact between the notched ring (6) and the second pipe portion (32) according to the first possibility, and/or detachment of the adjustment stud (7) from the bottom of the notch (60) within which said adjustment stud is engaged according to the second possibility, so as to sealingly compress even further the first seal (J2) or the second seal (J1) and simultaneously, by counter-reaction, the second seal (J1) or the first seal (J2), under the action of the pressure of the fluid.

15. The holding device according to one of claims 1 to 14 including the following features, considered separately or in combination:
- a stop valve (Ra) on a pipe preceding the upstream section, and/or
- at least one purge tap (Bp), communicating the inside and the outside of the pipe of the downstream section, and/or
- a valve (Sp) with a non-return function in a pipe extending the downstream pipe.

16. A piece of equipment including an apparatus (Ap) for measuring a characteristic of a fluid or of the surrounding environment, said measuring apparatus (Ap) having an inlet tube (Tbe) and an outlet tube (Tbs) and a holding device (1) according to one of claims 1 to 15 including the upstream section (2) and the downstream section (3) intended to be sealingly connected, respectively, to the inlet tube (Tbe) and to the outlet tube (Tbs) of said measuring apparatus (Ap).

17. The piece of equipment according to claim 16, wherein the measuring apparatus is a volumetric meter, such as a water meter.
